# EUROPÄISCHE PATENTSCHRIFT

(11) **EP 3 265 213 B1**
(45) Veröffentlichungstag und Bekanntmachung des Hinweises auf die Patenterteilung: **22.07.2020**
(21) Anmeldenummer: 16704803.2
(22) Anmeldetag: 29.01.2016
(51) Int. Cl.: B01D 53/56

(54) **VERFAHREN UND VORRICHTUNG ZUR DYNAMISCHEN ABGASBEHANDLUNG**
METHOD AND APPARATUS FOR DYNAMIC EXHAUST-GAS TREATMENT
PROCEDE ET DISPOSITIF DE TRAITEMENT DYNAMIQUE D'EFFLUENTS GAZEUX

(30) Priorität: 30.04.2015 DE 102015005459; 17.07.2015 DE 102015009089
(43) Veröffentlichungstag der Anmeldung: 10.01.2018
(73) Patentinhaber: Mehldau & Steinfath Umwelttechnik GmbH, 45133 Essen (DE)
(72) Erfinder: VON DER HEIDE, Bernd, 45133 Essen (DE)
(74) Vertreter: Strehlke, Ingo Kurt
(86) Internationale Anmeldenummer: PCT/EP2016/051899
(87) Internationale Veröffentlichungsnummer: WO 2016/173730

(56) Entgegenhaltungen:
- DE-A1-102009 040 111
- DE-A1-102013 003 829
- US-A1- 2008 250 778
- BERND VON DER HEIDE: "NOx Reduction for the Future with the SNCR Technology for Medium and Large Combustion Plants", POWER ENGINEERING AND ENVIRONMENT VSB - TECHNICKÁ UNIVERZITA OSTRAVA (CZECH REPUBLIC), 3. September 2010 (2010-09-03), Seiten 1-28, XP055268811,
- ZHOU H C ET AL: "Experimental investigations on visualization of three-dimensional temperature distributions in a large-scale pulverized-coal-fired boiler furnace", PROCEEDINGS OF THE COMBUSTION INSTITUTE, ELSEVIER, NL, vol. 30, no. 1, 1 January 2005 (2005-01-01), pages 1699-1706, XP027822944, ISSN: 1540-7489 [retrieved on 2005-01-01]

## Beschreibung

Die vorliegende Erfindung betrifft das technische Gebiet der Behandlung von Abgasen, insbesondere der Behandlung von Stickoxide enthaltenden Abgasen.

Die vorliegende Erfindung betrifft insbesondere ein Verfahren zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts unter chemischer Reduktion der Stickoxide. Insbesondere betrifft die vorliegende Erfindung ein Verfahren zur Entstickung von Abgasen aus großtechnischen Anlagen, wie beispielsweise Kraftwerken, insbesondere Heizkraftwerken, oder Müllverbrennungsanlagen.

Bei Verbrennungsreaktionen in Gegenwart von Luft entstehen metastabile, im Allgemeinen giftige und reaktive Oxide des Stickstoffs, sogenannte Stickoxide. Verstärkt wird die Bildung von Stickoxiden durch die Verbrennung bzw. Thermo- und Pyrolyse organischer und anorganischer stickstoffhaltiger Verbindungen, welche in Großfeuerungsanlagen, wie Heizkraftwerken oder Müllverbrennungsanlagen, auftritt.

Stickoxide, insbesondere die unter der Bezeichnung nitrose Gase bekannten Verbindungen Stickstoffmonoxid und Stickstoffdioxid, welche auch mit der Kurzform NOₓ bezeichnet werden, sind jedoch nicht nur giftig und führen zu Reizungen und Schädigung der Atmungsorgane, sondern fördern darüber hinaus auch die Entstehung des sauren Regens, da sie mit Feuchtigkeit zu Säuren reagieren.

Die Freisetzung von Stickoxiden ist jedoch noch aus weiterführenden Gründen des Umweltschutzes problematisch, da sie einerseits die Bildung von Smog und des schädlichen bodennahen Ozons fördern und andererseits als Treibhausgase die Erderwärmung verstärken.

Aufgrund der nachteiligen Auswirkungen der Stickoxide auf Gesundheit und Umwelt und nicht zuletzt durch die damit verbundenen volkswirtschaftlichen Schäden wurde schon früh versucht, die Freisetzung von Stickoxiden bei Verbrennungsvorgängen zu minimieren bzw. zu unterbinden. Bei PKWs wird dies beispielsweise durch den Einsatz von Katalysatoren erreicht, welche eine fast vollständige Entfernung der Stickoxide aus den Abgasen erlauben.

Die US 2008/250778 A1 etwa betrifft ein Verfahren zur Regulierung der Menge an Ammoniak, welche in einem Katalysator einer Abgasnachbehandlungsvorrichtung untergebracht ist, wobei das Verfahren folgende Verfahrensschritte umfasst: Bestimmung der Masse des Ammoniak in dem Katalysator, basierend auf der Dosierrate eines Dosierungsreagenzes, welches in den Abgasstrom stromaufwärts des Katalysators eingespritzt wird, und Bestimmung der Masse des Ammoniak, welche den Katalysator verlässt. Die akkumulierte Masse an Ammoniak in dem Katalysator wird auf Basis der Masse an Ammoniak, welche in den Katalysator gegeben wird, und der Masse an Ammoniak, welche den Katalysator verlässt, berechnet.

Zur Verminderung des Stickoxidausstoßes von großtechnischen Anlagen, insbesondere großindustriellen Feuerungsanlagen, wurden unter Berücksichtigung der jeweiligen Gesetzeslage sowie betriebswirtschaftlicher Erwägungen verschiedene Verfahren zur Entstickung bzw. Denitrifikation (DeNOx) entwickelt, welche allein oder in Kombination eine wirksame Verminderung bzw. Vermeidung von Stickoxiden in Abgasen, insbesondere Rauchgasen, bewirken sollen.

Die Verfahren bzw. Maßnahmen zur Reduzierung des Stickoxidgehalts von Abgasen, insbesondere Rauchgasen, lassen sich dabei in Primär- und Sekundärmaßnahmen unterteilen:
Im Rahmen der Primärmaßnahmen wird der Verbrennungsvorgang derart gesteuert, dass der Stickoxidgehalt in den resultierenden Abgasen möglichst gering ist; die Bildung der Stickoxide wird nach Möglichkeit unterdrückt bzw. gebildete Stickoxide werden möglichst unmittelbar, spätestens jedoch vor Verlassen des Feuerungsraums zersetzt. Zu den Primärmaßnahmen zählen beispielsweise die Rauchgasrezirkulation, bei welcher das Rauchgas nochmals in die Verbrennungszone geleitet wird, sowie Luft- bzw. Brennstoffstufen, in welchen die Verbrennung derart gesteuert wird, dass verschiedene Verbrennungszonen mit unterschiedlichen Sauerstoffkonzentrationen erhalten werden. Daneben kann die Entstehung von Stickoxiden in Rauchgasen auch durch den Zusatz von Additiven oder durch Quenchen, d. h. durch Eindüsen von Wasser zur Senkung der Temperatur während des Verbrennungsprozesses, vermindert werden.

Im Gegensatz zu den Primärmaßnahmen, welche die Entstehung der Stickoxide verhindern sollen, wird durch die Anwendung der Sekundärmaßnahmen die Konzentration der Stickoxide in den Abgasen, insbesondere Rauchgasen, gemindert. Zu den Sekundärmaßnahmen zählen beispielsweise Abscheideverfahren, bei welchen die Stickoxide chemisch gebunden oder aus dem Rauchgasstrom ausgewaschen werden. Nachteilig bei den Abscheideverfahren ist jedoch, dass große Mengen Abfallprodukte, wie beispielsweise Prozesswasser, welche oft mit weiteren Bestandteilen des Rauchgases verunreinigt sind, erhalten und aufwendig entsorgt werden müssen.

In modernen großtechnischen Anlagen werden daher als Sekundärmaßnahmen zumeist Verfahren angewendet, welche auf einer Reduktion der Stickoxide zu elementarem Stickstoff beruhen und nur zu geringen Mengen an Abfallstoffen führen, wobei generell zwischen katalytischen und nicht-katalytischen Verfahren unterschieden wird.

Die selektive katalytische Reduktion der Stickoxide (**S**elective **C**atalytic **R**eduction oder SCR) umfasst katalytische Verfahren, bei welchen die Stickoxide unter Zuhilfenahme von Metallkatalysatoren zu elementarem Stickstoff umgesetzt werden. Mit SCR-Verfahren lassen sich im Allgemeinen die besten Denitrifikationswerte erhalten, wobei der Einsatz des Katalysators das Verfahren jedoch deutlich kostenintensiver und wirtschaftlich wenig rentabel macht. Darüber hinaus sind die Anlagen zur Durchführung des SCR-Verfahrens nicht nur in der Anschaffung, sondern auch im Unterhalt äußerst kostenintensiv, da die empfindlichen Katalysatoren in engen Zeitintervallen gewartet bzw. ausgetauscht werden müssen. Gerade in Großfeuerungsanlagen deren Brennstoffzusammensetzung oft nur unzureichend bestimmt werden kann, wie beispielsweise bei Müllverbrennungsanlagen, besteht daher stets die Gefahr einer Vergiftung der Katalysatoren durch Verunreinigungen des Rauchgases. Dieses Risiko kann nur durch zusätzliche kostenintensive Maßnahmen reduziert werden.

So betrifft die DE 10 2009 040 111 A1 etwa ein System zur selektiven katalytischen Reduktion von Stickoxiden im Abgas von Verbrennungsmotoren oder dergleichen mittels eines SCR-Katalysators, wobei eine Einbringung eines gelösten Reduktionsmittels, insbesondere einer Harnstofflösung, in den Abgasstrom mittels einer Dosierung erfolgt, wobei das System eine mit dem Reduktionsmitteltank verbindbare oder verbundene Förderleitung aufweist, wobei das System eine Sensoranordnung aufweist, mittels derer der Volumen- und/oder Massenstrom und zumindest eine Stoffeigenschaft des geförderten Reduktionsmittels, insbesondere der Harnstofflösung, erfassbar ist oder erfasst wird.

Die selektive nicht-katalytische Reduktion (**S**elective **N**on-**C**atalytic **R**eduction oder SNCR) beruht dagegen auf der Thermolyse von Stickstoffverbindungen, insbesondere Ammoniak oder Harnstoff, welche dann in einer Komproportionierungsreaktion mit den Stickoxiden zu elementarem Stickstoff reagieren.

Die selektive nicht-katalytische Reduktion ist im Vergleich zur selektiven katalytischen Reduktion deutlich kostengünstiger durchzuführen: So betragen die Kosten für Anschaffung und Unterhalt von SNCR-Anlagen gerade einmal 10 bis 20 % der Kosten entsprechender SCR-Anlagen.

Problematisch an den SNCR-Verfahren ist jedoch, dass diese in ihrer Wirksamkeit nicht an die Wirksamkeit katalytischer Verfahren heranreichen, so dass beispielsweise bei einer weiteren Absenkung der gesetzlich erlaubten Grenzwerte von Stickoxiden in Abgasen, insbesondere Rauchgasen, die meisten SNCR-Anlagen nicht mehr betrieben werden dürften.

Ein weiterer Nachteil der auf der selektiven nicht-katalytischen Reduktion von Stickoxiden beruhenden Verfahren ist, dass das Reduktionsmittel im Überschuss eingesetzt werden muss und nicht vollständig abreagiert, so dass das Abgas eine gewisse, unter Umständen nicht unbedeutende Ammoniakbelastung aufweist. Überschüssiges Ammoniak im Abgas muss entweder abgetrennt oder durch prozesstechnische Maßnahmen in seinem Gehalt derart reduziert werden, dass eine Abgabe des Abgasstroms an die Umwelt möglich ist.

Daneben gibt es auch Verfahren, welche sowohl auf einer katalytischen Wirkungsweise als auch auf dem Einsatz von Reduktionsmitteln beruhen, wobei jedoch auch diese Verfahren nicht die prinzipiellen Nachteile der jeweiligen Verfahren (hohe Kosten für den Einsatz katalytischer Verfahren bzw. geringe Wirksamkeit für den Einsatz von Reduktionsmitteln) überwinden können.

In der jüngeren Vergangenheit wurden neuartige SNCR-Anlagen und SNCR-Verfahren entwickelt, welche auf der kombinierten Verwendung mehrerer Reduktionsmittel beruhen und welche in ihrer Wirksamkeit den katalytischen Verfahren ebenbürtig sind, jedoch können diese Anlagen bzw. Verfahren nicht unter allen Betriebsbedingungen stets optimale Ergebnisse liefern.

So sind die für SNCR-Verfahren notwendigen Temperaturen, welche im Bereich von 900 bis 1.050 °C liegen, oftmals von Nachteil, da diese hohen Temperaturen eine Behandlung bzw. Entstickung der Rauchgase vor Eintritt des Rauchgases in den Bereich der Wärmetauscher erfordern. Infolgedessen kommt es insbesondere bei der Nachrüstung von Brennkesseln mit SNCR-Anlagen sowie beim Betrieb von Brennkesseln unter Volllast oftmals vor, dass eine Eindüsung des Reduktionsmittels in einem für das SNCR-Verfahren günstigen Temperaturbereich durch die Konstruktion des Kessels nicht möglich ist oder die für die Reduktion günstigen Temperaturen im Bereich der Heizflächen bzw. Wärmetauscher erreicht werden. In diesen Fällen ist oftmals ein Großteil der Rauchgase, welcher bis zu 50 % des Rauchgasvolumens betragen kann, durch die Reduktionsmittel nicht erreichbar oder das Reduktionsmittel muss in einem ungünstigen Temperaturbereich in den Abgasstrom eingebracht werden. Weiterhin droht bei Verwendung von Harnstoff als Reduktionsmittel im Bereich der Wärmetauscher die Gefahr der Ablagerung von Ammoniak- bzw. Ammoniumsalzen und somit der Korrosion.

Die Einbringung bzw. Eindüsung des Reduktionsmittels in den Rauchgasstrom im optimalen Temperaturbereich ist jedoch kritisch für die Wirksamkeit der Stickoxidreduktion und somit der Effizienz der Denitrifikation. Beispielsweise betrifft die wissenschaftliche Veröffentlichung: Bernd von der Heide: "NOx Reduction for the Future with the SNCR Technology for Medium and Large Combustion Plants", Power Engineering and Environment VSB - Technickä Univerzita Ostrava (Czech Republic), 3. Sepember 2010, Seiten 1-28, XP055268811, die Entstickung von Rauchgasen aus großtechnischen Anlagen durch Reduktion der Stickoxide mittels Ammoniak oder wässriger Harnstofflösung, wobei die Reduktionsmittel in Abhängigkeit von den jeweils im Rauchgasstrom herrschenden Temperaturen in den Rauchgasstrom eingebracht werden

Bei der Eindüsung der Reduktionsmittel oberhalb von 1.100 °C wird in zunehmendem Maße das Reduktionsmittel zu Stickoxiden oxidiert, wodurch einerseits die Abscheiderate an Stickoxiden sinkt und andererseits der Verbrauch an Reduktionsmitteln steigt. Wird hingegen bei zu niedrigeren Temperaturen eingedüst, verringert sich die Reaktionsgeschwindigkeit, wodurch der sogenannte Ammoniak-Schlupf entsteht, der in der Bildung von Ammoniak- bzw. Ammoniumsalzen resultiert. Hierdurch entstehen Sekundärprobleme, wie beispielsweise eine Belastung bzw. Kontamination der Flugasche mit Ammoniak- bzw. Ammoniumsalzen, deren Menge sich einerseits erheblich vergrößert und deren Entsorgung aufwendig und damit kostenintensiv ist. Darüber hinaus gelten strenge gesetzliche Grenzwerte für den Ammoniakgehalt des gereinigten Abgases, um Umweltschäden möglichst zu vermeiden.

Auch betriebsbedingt auftretende Temperaturschieflagen im Kessel, d. h. großen Temperaturunterschieden und unterschiedlichen Strömungsgeschwindigkeiten in einer Ebene senkrecht zur Strömungsrichtung der Abgase, führen dazu, dass die Reduktionsmittel nicht über den gesamten Kesselquerschnitt gleichmäßig verteilt werden. So resultiert stets eine Eindüsung von Reduktionsmitteln in Bereiche des Rauchgases, die außerhalb des wirksamen Temperaturfensters bzw. -bereichs liegen. Die Folgen sind wiederum eine unzureichende Stickoxidreduktion, ein hoher Reduktionsmittelverbrauch bzw. ein hoher Ammoniak-Schlupf.

Um Temperaturschieflagen auszugleichen und das Temperaturfenster zur Reduktion der Stickoxide mittels des SNCR-Verfahrens auch bei Volllast des Kessels in den Bereich vor den Wärmetauschern zu verlagern, wurden Verfahren entwickelt, bei welchen Wasser in den Rauchgasstrom eingedüst wird, um diese abzukühlen. Insbesondere durch eine selektive, d. h. örtlich und zeitlich begrenzte, Zugabe von Wasser in den Rauchgasstrom können gute Ergebnisse erzielt werden.

Die Wassereindüsung zur Kühlung der Rauchgase bietet unter anderem den großen Vorteil, dass oftmals auf aufwendige und kostenintensive Kesselumbauten verzichtet werden kann, wenn die Rauchgase vor dem Eintritt in die Wärmetauscher auf die bevorzugte Reaktionstemperatur der Reduktionsmittel abgekühlt werden. So betrifft die DE 10 2013 003 829 A1 beispielsweise ein Verfahren zur Behandlung von Stickoxide enthaltenden Abgasen aus technischen Prozessen zu Zwecken der Entfernung bzw. Abscheidung der Stickoxide, wobei in einem ersten Verfahrensschritt eine selektive Abkühlung der Abgase erfolgt und gleichzeitig und/oder nachfolgend in einem zweiten Verfahrensschritt die Entfernung und/oder Abscheidung der Stickoxide aus den Abgasen erfolgt. Dies hat aber auch den wesentlichen Nachteil, dass je nach Rauchgastemperaturen und Betriebsstunden, in denen der Kessel im oberen Lastbereich betrieben wird, der Kesselwirkungsgrad wegen Wasserverdampfung im Rauchgas beeinträchtigt wird.

Die Effizienz der Wärmetauscher und somit der Energiegewinnung, beispielsweise in Heizkraftwerken, wird folglich deutlich herabgesetzt ist. So beträgt beispielsweise der Verlust, welcher durch eine Wassereindüsung als Kühlmittel im Rahmen des SNCR-Verfahrens entsteht, bei einem 225 MW Heizkraftwerk allein bis zu 3 MW, was verdeutlicht, wie stark eine Kühlung der Abgase die Effizienz des gesamten Kraftwerks vermindert. Auch aus diesem Grund besteht stets ein Bestreben, die Wassermenge, welche bei der Durchführung des SNCR-Verfahrens in den Rauchgasstrom eingebracht wird, so gering wie möglich zu halten.

Erschwerend bei der Entstickung von Abgasen, insbesondere von Rauchgasen, kommt darüber hinaus hinzu, dass der Abgasstrom nicht homogen ist, sondern an unterschiedlichen Orten vielmehr unterschiedliche Temperaturen, unterschiedliche Gasgeschwindigkeiten sowie unterschiedliche Konzentrationen an Abgasen aufweist und stark zeitlichen Schwankungen ausgesetzt ist. Aufgrund dieser chaotischen und sich ständig ändernden Bedingungen kommt es im Zuge der Durchführung des Entstickungsverfahrens, insbesondere des SNCR-Verfahrens, üblicherweise zu Fehldosierungen des Reduktionsmittels in den Abgasstrom, so dass entweder der Ammoniak-Schlupf vergrößert oder die Wirksamkeit des Verfahrens herabgesetzt wird.

Darüber hinaus steht bislang kein Konzept zur Verfügung, wie die Einbringung von Kühlwasser und Reduktionsmittel zeitnah, vorzugsweise simultan, an die sich schnell ändernden Bedingungen im Rauchgasstrom angepasst werden kann.

Es wäre daher wünschenswert ein SNCR-Verfahren zur Verfügung zu haben, welches den zuvor genannten Punkten noch weiter Rechnung trägt als die bislang bekannten Verfahren des Standes der Technik und welches es erlaubt, den Verbrauch an Kühlwasser und Reduktionsmittel deutlich zu verringern, wobei gleichzeitig der Ammoniak-Schlupf nochmals deutlich reduziert ist.

Der vorliegenden Erfindung liegt daher die Aufgabe zugrunde, ein Verfahren und eine Vorrichtung bzw. Anlage zur Behandlung von Stickoxide enthaltenden Abgasen aus technischen Prozessen, wie Rauchgasen, zu Zwecken der Entfernung bzw. Abscheidung der Stickoxide und/oder zu Zwecken der Verringerung des Stickoxidgehalts mittels chemischer Reduktion der Stickoxide bereitzustellen, wobei die zuvor geschilderten, im Zusammenhang mit dem Stand der Technik auftretenden Probleme und Nachteile zumindest weitgehend vermieden oder aber wenigstens abgeschwächt werden sollen.

Insbesondere ist es eine Aufgabe der vorliegenden Erfindung, ein Verfahren bereitzustellen, welche eine exaktere Dosierung von Reduktionsmitteln und gegebenenfalls Kühlwasser in dem optimalen Temperaturbereich bzw. dem optimalen Temperaturfenster zur Entfernung bzw. Verringerung der Stickoxide aus dem Rauchgas zur Verfügung zu stellen, so dass die benötigte Gesamtwassermenge und der Reduktionsmittelverbrauch auf ein Minimum beschränkt wird und kein oder nur wenig Ammoniak-Schlupf entsteht.

Insbesondere ist eine Aufgabe der vorliegenden Erfindung darin zu sehen, eine zur Durchführung der vorgenannten Verfahren geeignete Vorrichtung bzw. Anlage bereitzustellen, mit welcher Abgase aus großtechnischen Anlagen entstickt werden können, wobei das Verfahren und die Vorrichtung bzw. Anlage flexibel einsetzbar sein sollen, insbesondere auch zur Nachrüstung von bereits vorhandenen Brennkesseln geeignet sind, und welche die Effizienz bzw. den Wirkungsgrad einer selektiven katalytischen Reduktion erreichen, der Kostenaufwand jedoch vergleichbar mit einer üblichen selektiven nicht-katalytischen Reduktion ist.

Die zuvor geschilderte Aufgabenstellung wird erfindungsgemäß durch ein Verfahren nach Anspruch 1 gelöst; weitere vorteilhafte Weiterbildungen und Ausgestaltungen des erfindungsgemäßen Verfahrens sind Gegenstand der diesbezüglichen Verfahrensunteransprüche.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich auch in Bezug auf die übrigen Erfindungsaspekte entsprechend gelten, ohne dass es einer ausdrücklichen Erwähnung bedarf.

Weiterhin versteht es sich von selbst, dass bei der nachfolgenden Angabe von Werten, Zahlen und Bereichen die diesbezüglichen Werte-, Zahlen- und Bereichsangaben nicht beschränkend zu verstehen sind; es versteht sich für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber mit dem Fachmann auf diesem Gebiet an sich geläufigen Bestimmungsmethoden ermittelt bzw. bestimmt werden können.

Dies vorausgeschickt, wird im Folgenden die vorliegende Erfindung näher beschrieben.

Gegenstand der vorliegenden Erfindung - gemäß einem **ersten** Aspekt der vorliegenden Erfindung - ist somit ein Verfahren zur Entstickung von Abgasen aus großtechnischen Anlagen mittels chemischer Reduktion der Stickoxide, wobei mindestens ein stickstoffhaltiges Reduktionsmittel in den Strom der Stickoxide enthaltenden Abgase eingebracht wird und die Menge des in den Abgasstrom eingebrachten Reduktionsmittels in Abhängigkeit von der Abgasgeschwindigkeit eingestellt wird und für jede einzelne Eindüseinrichtung individuell oder zumindest gruppenweise regelbar ist, wobei zur Ermittlung und/oder Bestimmung der Abgasgeschwindigkeit ein Temperaturprofil und/oder ein Temperaturgradient des Abgasstroms erstellt wird, wobei auf Grundlage des Temperaturprofils und/oder des Temperaturgradienten des Abgasstroms die relative Geschwindigkeit des Abgasstroms bestimmt wird, indem im Abgasstrom jeweils Ebenen von Sektionen (Messbereiche) definiert werden, wobei die Ebenen der Sektionen in Strömungsrichtung der Abgase aufeinanderfolgend und miteinander fluchtend angeordnet sind und miteinander korreliert werden, wobei in den verschiedenen Sektionen der jeweiligen Ebenen jeweils die Abgastemperatur zumindest in einer ersten Ebene stromaufwärts zu den Eindüseinrichtungen und zumindest in einer zweiten Ebene stromabwärts zu den Eindüseinrichtungen bestimmt wird und auf Grundlage der ermittelten Abgastemperaturen der verschiedenen Sektionen der jeweiligen Ebenen Temperaturprofile und/oder Temperaturgradienten zwischen den in den jeweiligen Ebenen jeweils in Strömungsrichtung aufeinanderfolgenden und miteinander fluchtenden sowie miteinander korrelierten Sektionen bestimmt werden, und wobei auf Grundlage der Temperaturprofile und/oder der Temperaturgradienten im Abgasstrom die relative Geschwindigkeit der Abgase in den verschiedenen Sektionen zueinander bestimmt wird und den Ebenen von Sektionen einzelne definierte Eindüseinrichtungen und/oder definierte Gruppen von Eindüseinrichtungen zur Einbringung des Reduktionsmittels zugeordnet werden.

Wie sich überraschend herausgestellt hat, lässt sich eine verbesserte, insbesondere eine deutlich reaktionsschnellere und sensitivere, Regelung von Entstickungsverfahren auf Basis der chemischen Reduktion von Stickoxiden durchführen, wenn die Abgasgeschwindigkeit, insbesondere die Rauchgasgeschwindigkeit, bei der Steuerung der in den Abgasstrom eingebrachten Menge des Reduktionsmittels berücksichtigt wird. Dies gilt insbesondere für den Fall, dass die Einbringung der Reduktionsmittel örtlich und zeitlich begrenzt wird, d. h. dass mit der sogenannten temperaturabhängigen Einzellanzenumschaltung gearbeitet wird, bei welcher nur Eindüseinrichtungen bzw. -lanzen zur Einbringung des Reduktionsmittels in den Rauchgasstrom aktiviert werden, die in den zur Reduktion der Stickoxide optimalen Temperaturbereich eindüsen.

Im Rahmen der vorliegenden Erfindung wird eine adaptive dynamische Rauchgasbehandlung zur Verfügung gestellt, welche äußerst flexibel und mit kurzen Reaktionszeiten an die jeweiligen Verhältnisse des Abgasstroms, insbesondere des Rauchgasstroms, angepasst werden kann.

Die Abgasgeschwindigkeit, insbesondere die Rauchgasgeschwindigkeit, eignet sich als Parameter zur Steuerung der Entstickung von Abgasen, insbesondere Rauchgasen, da die Abgasgeschwindigkeit mit der NOx-Fracht (Stickoxidfracht) des Abgasstromes korreliert. Insbesondere ist das Produkt aus Geschwindigkeit des Abgasstromes sowie der Stickoxid-Konzentration der NOx-Fracht proportional. Wie sich nun herausgestellt hat, lässt sich durch eine Bestimmung der relativen Geschwindigkeiten des Abgasstromes eine deutlich verbesserte Steuerung des gesamten Entstickungsverfahrens erzielen.

Im Rahmen der im Stand der Technik durchgeführten Verfahren zur Entstickung von Rauchgasen mittels chemischer Reduktion wird die Menge des eingedüsten Reduktionsmittels über das Lastsignal eingestellt und über einen Vergleich des Stickoxidgehalts des nach der Abgasbehandlung erhaltenen Gases, des sogenannten Reingases, und einem Sollwert gesteuert. Durch diese Art der Steuerung lässt sich jedoch das Ergebnis der durchgeführten Abgasbehandlung erst drei bis fünf Minuten nach der tatsächlichen Durchführung der Abgasbehandlung beurteilen, so dass eine Prozesssteuerung aufgrund dieser Daten nicht den aktuellen Gegebenheiten im Abgasstrom entspricht, sondern vielmehr auf die Verhältnisse im Abgasstrom reagiert, welche dort drei bis fünf Minuten zuvor herrschten.

Darüber hinaus trägt diese Art der Steuerung der Inhomogenität des Rauchgasstroms mit insbesondere unterschiedlichen Rauchgasgeschwindigkeiten nicht Rechnung. Im Rahmen der vorliegenden Erfindung wird somit eine adaptive Rauchgasbehandlung zur Verfügung gestellt, welche die Verhältnisse im Rauchgasstrom in Echtzeit erfasst und eine simultane Steuerung in Abhängigkeit der gemessenen Parameter ermöglicht.

Insbesondere ist es im Rahmen der vorliegenden Erfindung im Vergleich zu Verfahren des Standes der Technik auf Grundlage der neuartigen adaptiven Verfahrensführung möglich,
(a) den Ammoniak-Schlupf um 20 bis 30 % zu reduzieren,
(b) den Reduktionsmittelverbrauch gleichfalls um 20 bis 30 % zu reduzieren und
(c) den Wasserverbrauch um bis zu 75 %, mindestens jedoch um 25 bis 35 %, zu reduzieren.

Der Abgasstrom technischer Prozesse, insbesondere ein Rauchgasstrom, ist nicht homogen, sondern unterliegt im Hinblick auf Temperaturen, Abgasgeschwindigkeiten und Konzentrationen der Abgase starken örtlichen und zeitlichen Schwankungen, d. h. die vorgenannten Parameter ändern sich an einem Fixpunkt im Abgasstrom mit der Zeit, wobei gleichzeitig auch Unterschiede zwischen verschiedenen Orten im Abgasstrom vorliegen. Bei den bislang bekannten Verfahren werden die Inhomogenität und die Schwankungen des Abgasstroms nur unzureichend berücksichtigt; so werden allenfalls Temperaturschwankungen in die Steuerung der Entstickung einbezogen. Diese Steuerung ist jedoch sehr ungenau, da nicht berücksichtigt wird, dass in verschiedenen Bereichen des Abgasstroms unterschiedliche Stickoxidkonzentrationen und Rauchgasgeschwindigkeiten vorliegen. Die Rauchgasgeschwindigkeit korreliert jedoch mit der NOx-Fracht. Im Rahmen der bekannten Verfahren zur Entstickung von Rauchgasen führen daher die verschiedenen Abgasgeschwindigkeiten bei gleichen Stickoxidkonzentrationen im Abgasstrom und gleicher Reduktionsmittelmenge zu einer Überdosierung und damit zu einem höheren Ammoniak-Schlupf im Bereich mit niedriger Rauchgasgeschwindigkeit. Um eine Überdosierung zu vermeiden, welche wiederum zur Belastung der Abgase mit Ammoniak - dem sogenannten Ammoniak-Schlupf - bzw. Ammoniumsalzen führt, muss in diesen Bereichen entweder die Einbringung des Reduktionsmittels gestoppt oder die Reduktionsmittelmenge verringert werden.

Ammoniak-Schlupf kann nur entstehen, wenn die Rauchgastemperatur zu niedrig ist oder im optimalen Temperaturbereich überdosiert wird. Bei zu hohen Temperaturen entsteht kein oder nur wenig Schlupf, da das Reduktionsmittel zu Stickoxiden verbrennt, was jedoch wiederum die Wirksamkeit des Entstickungsverfahren herabsetzt und den Reduktionsmittelverbrauch erhöht.

Bei zu niedrigen Temperaturen kann der Ammoniak-Schlupf, der an zu kalten Stellen entsteht, vermieden werden, indem die entsprechenden Eindüseinrichtungen, insbesondere die Eindüslanzen, zur Einbringung des Reduktionsmittels so geschaltet werden, dass in einen Bereich mit höheren Temperaturen eingedüst wird. Hierdurch wird auch einerseits ein höherer Abscheidegrad und andererseits ein geringer Reduktionsmittelverbrauch erreicht, allerdings wird oftmals keine vollständige Durchmischung von Abgas und Reduktionsmittel erzielt, so dass die Wirksamkeit der Entstickung herabgesetzt ist.

Falls die Eindüsung in einem Bereich mit höherer Temperatur nicht möglich ist, kann der Ammoniak-Schlupf des gesamten Abgasstroms auch dadurch vermindert werden, dass die Eindüsung an der Stelle, an welcher der Ammoniak-Schlupf entsteht, unterbrochen wird, so lange die Temperatur nicht im optimalen Bereich liegt. Dies hat jedoch zur Folge, dass der Gesamtwirkungsgrad sinkt und der Reduktionsmittelverbrauch steigt, weil die Reduktionsmittelverteilung über den gesamten Querschnitt des Abgasstroms nicht mehr homogen ist. Bessere Ergebnisse können daher erzielt werden, wenn an den Stellen, an welchen die Abgasgeschwindigkeit niedriger ist, weniger Reduktionmittel in den Abgasstrom eingebracht wird.

Bislang sind keine Verfahren zur Steuerung von Denitrifikationsverfahren, insbesondere von SNCR-Verfahren, bekannt, welche auf einer Steuerung des Verfahrens auf Grundlage der Abgasgeschwindigkeit beruhen. Dass ein derartiges Verfahren bislang noch nicht in Betracht gezogen wurde, ist insbesondere darin begründet, dass eine Messung der Abgasgeschwindigkeiten, insbesondere der Rauchgasgeschwindigkeiten, wegen der hohen Abgastemperaturen von circa 1.000 °C praktisch nicht realisiert werden kann, insbesondere nicht in großtechnischen Anlagen unter üblichen Betriebsbedingungen.

Es hat sich jedoch herausgestellt, dass durch geeignete Temperaturmessungen genügend ortsaufgelöste Informationen über die Rauchgasgeschwindigkeiten, erhalten werden können, welche es erlauben, eine deutlich flexiblere und schnellere Steuerung des Entstickungsverfahrens zu gewährleisten. Überraschenderweise lassen sich aus den Temperaturdaten auch während der Durchführung des Entstickungsverfahrens kontinuierlich Daten gewinnen, welche Rückschlüsse auf die Rauchgasgeschwindigkeit zulassen. Das erfindungsgemäße Verfahren erlaubt somit eine ständige adaptive und dynamische Steuerung der Entstickung.

Im Rahmen der vorliegenden Erfindung ist es üblicherweise vorgesehen, dass der Abgasstrom in mindestens eine Strömungsrichtung geführt wird, insbesondere durch einen Reaktor. Bei dem Reaktor zur Durchführung des erfindungsgemäßen Verfahrens handelt es sich üblicherweise um die Verbindung zwischen dem eigentlichen Brennkessel und den Wärmetauschern, da in diesem Bereich das erfindungsgemäße Verfahren bevorzugt durchgeführt wird. Durch den Reaktor bzw. die Verbindung zwischen Brennkessel und Wärmetauschern werden die Abgase, insbesondere die Rauchgase, geführt, wodurch eine Strömungsrichtung der Abgase entsteht.

Erfindungsgemäß ist es vorgesehen, dass zur Ermittlung und/oder Bestimmung der Abgasgeschwindigkeit ein Temperaturprofil und/oder ein Temperaturgradient des Abgasstroms erstellt wird.

In diesem Zusammenhang ist es vorgesehen, dass auf Grundlage des Temperaturprofils und/oder des Temperaturgradienten des Abgasstroms die relative Geschwindigkeit des Abgasstroms bestimmt wird.

Es hat sich nämlich überraschenderweise herausgestellt, dass durch die Bestimmung von Temperaturprofilen und Temperaturgradienten innerhalb des Abgasstromes, genug Informationen gewonnen werden können, welche Rückschlüsse auf die Geschwindigkeiten des Abgasstromes zulassen.

Besonders vorteilhaft ist das erfindungsgemäß Verfahren unter anderem deshalb, da überraschenderweise gefunden wird, dass eine Bestimmung der absoluten Geschwindigkeiten des Abgasstromes - welche praktisch nicht durchzuführen ist - nicht notwendig ist, um das Entstickungsverfahren adaptiv zu regeln. Es hat sich vielmehr herausgestellt, dass eine Bestimmung der relativen Geschwindigkeiten, d. h. der relativen Geschwindigkeiten der Abgase in unterschiedlichen Bereichen des Abgasstromes zueinander, vollkommen ausreicht, um die Effizienz des gesamten Entstickungsverfahrens wie zuvor geschildert deutlich zu verbessern und den Ammoniak-Schlupf, den Wasserverbrauch und den Reduktionsmittelverbrauch deutlich zu senken.

Überraschenderweise hat sich herausgestellt, dass auch während der Durchführung des Entstickungsverfahrens, d. h. während der Einbringung von Reduktionsmitteln und Kühlwasser in den Abgasstrom, die ermittelten Temperaturprofile bzw. Temperaturgradienten des Abgasstromes verwendet werden können, um die relative Geschwindigkeit der Abgase zu bestimmen. Dies ist unter anderem darin begründet, dass bei der Einbringung von Kühlwasser bzw. wässrigen Lösungen von Reduktionsmitteln in den Abgasstrom bei bekanntem Ort der Einbringung die Kühlwirkung bestimmt werden kann und folglich aus der gemessenen Abkühlung des Rauchabgasstromes zwischen zwei Messpunkten bzw. -bereichen auf die Rauchgasgeschwindigkeit geschlossen werden kann: Da heißeres Abgas, insbesondere Rauchgas, einen höheren Auftrieb hat und langsamer strömendes Abgas an den Kesselwänden bzw. in den Wärmetauschern stärker abgekühlt wird, weist eine größere Abkühlung zwischen den einzelnen Messbereichen auf eine geringere Rauchgasgeschwindigkeit hin als zwischen den Messbereich, in denen die Abkühlung weniger ausgeprägt ist. Auf Basis der so gewonnenen Informationen können ortsaufgelöste Temperaturprofile bzw. Temperaturgradienten gewonnen werden, welche eine Aussage über die relativen Rauchgasgeschwindigkeiten erlauben. Die so gewonnenen Informationen dienen dann als Grundlage, um die Reduktionsmittelzufuhr in den Rauchgasstrom zu regeln.

Im Rahmen der vorliegenden Erfindung werden besonders gute Ergebnisse erhalten, wenn zur Ermittlung des Temperaturprofils und/oder des Temperaturgradienten des Abgasstroms die Temperaturen des Abgasstroms in Ebenen, insbesondere in vorzugsweise parallelen, insbesondere parallelen und miteinander fluchtenden (d. h. in Flucht stehenden), Ebenen jeweils orthogonal zur Strömungsrichtung der Abgase, ermittelt werden.

Im Rahmen der vorliegenden Erfindung ist es vorgesehen, dass im Abgasstrom, insbesondere jeweils orthogonal zur Strömungsrichtung der Abgase, jeweils Ebenen von Sektionen, d. h. insbesondere Messbereiche, definiert werden. In diesem Zusammenhang kann es vorgesehen sein, dass sich die Ebenen der Sektionen jeweils orthogonal zur Strömungsrichtung der Abgase und/oder parallel zueinander erstrecken.

Weiter ist im Rahmen der vorliegenden Erfindung vorgesehen, dass die Ebenen der Sektionen in Strömungsrichtung der Abgase r aufeinanderfolgend und miteinander fluchtend angeordnet sind. Im Rahmen der vorliegenden Erfindung wird somit der Querschnitt des Abgasstromes (insbesondere orthogonal zur Strömungsrichtung der Abgase) in Sektionen unterteilt, wobei übereinanderliegende Ebenen von Sektionen so ausgerichtet sind, dass sie miteinander in Flucht stehen, d. h. genau unmittelbar übereinander angeordnet sind und dreidimensionale Bereiche, vorzugsweise Quader, definieren. Dies geht jedoch nur soweit, wie es die Konstruktion des Reaktors, insbesondere des Kessels zulässt. Maßgeblich ist, dass stets Sektionen der ebenen Querschnitte des Abgasstroms miteinander korreliert werden können, d. h. dass die gemessene Rauchgastemperatur in einem Bereich zum Zeitpunkt x mit der Rauchgastemperatur in einem darüber liegenden Bereich zum Zeitpunkt y korreliert werden kann.

Erfindungsgemäß wird in diesem Zusammenhang in den verschiedenen Sektionen der jeweiligen Ebenen jeweils die Abgastemperatur bestimmt und werden auf Grundlage der ermittelten Abgastemperaturen der verschiedenen Sektionen der jeweiligen Ebenen Temperaturprofile und/oder Temperaturgradienten von in den jeweiligen Ebenen jeweils in Strömungsrichtung aufeinanderfolgenden und miteinander fluchtenden Sektionen bestimmt.

Im Rahmen des erfindungsgemäßen Verfahrens wird somit derart vorgegangen, dass orthogonal zur Strömungsrichtung der Abgase, insbesondere der Rauchgase, die Temperaturen des Abgasstroms in den jeweiligen in Strömungsrichtung der Abgase aufeinanderfolgenden Messebenen bestimmt werden und die Ebenen anschließend in Sektionen unterteilt werden, wobei die Unterteilung in den jeweiligen Ebenen einander vorzugsweise entspricht, so dass die Sektionen aufeinanderfolgender Ebenen miteinander korreliert werden können und dreidimensionale Bereiche definieren, welche sich axial zur Strömungsrichtung der Abgase erstrecken und jeweils zwei Sektionen als Grundflächen aufweisen.

Aufgrund der jeweiligen Konstruktion der Kessel bzw. Feuerungsräume kann es möglich sein, dass nicht sämtliche Sektionen miteinander korreliert werden können. Das erfindungsgemäße Verfahren kann jedoch auch durchgeführt werden, wenn ein überwiegender Teil von Sektionen von aufeinanderfolgenden Ebenen miteinander korreliert werden kann, wobei jedoch die Effizienz des Verfahrens gegenüber einer Korrelation sämtlicher Sektionen aufeinanderfolgender Ebenen vermindert ist. Durch die Bestimmung der Abgastemperaturen in den Ebenen orthogonal zur Strömungsrichtung der Abgase ist es möglich, ein Temperaturprofil der Abgase und insbesondere auch Temperaturgradienten zwischen den jeweiligen korrelierten Sektionen zu bestimmen.

Im Rahmen der vorliegenden Erfindung ist es vorgesehen, dass auf Grundlage der Temperaturprofile und/oder der Temperaturgradienten im Abgasstrom die relative Geschwindigkeit der Abgase bestimmt wird.

Wie zuvor bereits ausgeführt, hat sich überraschend gezeigt, dass es für eine besonders flexible und adaptive Prozessregelung, welche sich an die sich rasch ändernden Bedingungen im Abgasstrom anpasst, ausreicht, die relativen Geschwindigkeiten im Abgasstrom zu bestimmen. Ein Abgasstrom ist weder homogen noch gleichförmig, sondern ist ein turbulentes, chaotisches und sich ständig änderndes Gebilde. Innerhalb des Abgasstromes weichen die Konzentration der Abgase, die Temperaturen sowie die Abgasgeschwindigkeiten stark voneinander ab.

Das erfindungsgemäße Verfahren stellt jedoch eine Möglichkeit zur Verfügung, auf Basis einer Bestimmung von Temperaturprofilen bzw. Temperaturgradienten des Abgasstroms die relativen Abgasgeschwindigkeiten innerhalb des Abgasstroms zu bestimmen, um auf diese Weise die Menge des eingebrachten Reduktionsmittels adaptiv und simultan an die jeweiligen im Abgasstrom herrschenden Bedingungen anzupassen.

Die Ermittlung der Temperaturprofile bzw. Temperaturgradienten des Abgasstroms ermöglicht es darüber hinaus, nicht nur allgemein die Menge des eingebrachten Reduktionsmittels exakter zu dosieren, sondern auch die Orte, an welchen das Reduktionsmittel in den Abgasstrom eingebracht wird. Bei dem bislang aus dem Stand der Technik bekannten Verfahren erfolgt die Regelung der eingebrachten Reduktionsmittelmenge allein über das Lastsignal sowie die Bestimmung des Stickoxidgehalts des nach der Abgasbehandlung erhaltenen Reingases. Diese Art der Steuerung bzw. Regelung ist jedoch sehr träge, da insbesondere die Reingaswerte üblicherweise erst 3 bis 5 Minuten nach der Abgasbehandlung zur Verfügung stehen und eine Prozessregelung auf Basis dieser Werte die aktuelle Stickoxidfracht im Abgas nicht berücksichtigen kann. Weiterhin erlaubt die Steuerung über das Lastsignal und in die Reingaswerte der Abgase keinerlei Aussage darüber, an welchen Orten des Abgasstromes welche Mengen an Reduktionsmittel eingedüst werden müssen. Die Folge des Verfahrens des Standes der Technik sind Über- bzw. Unterdosierungen, welche entweder die Effizienz des Entstickungsverfahrens deutlich senken oder zu einem erhöhten Ammoniak-Schlupf führen.

Was nun die Anzahl der Ebenen anbelangt, welche im Rahmen des erfindungsgemäßen Verfahrens zur Ermittlung der Temperaturprofile bzw. der Temperaturgradienten verwendet werden, so kann diese naturgemäß in Abhängigkeit von den jeweiligen Bedingungen in weiten Bereichen variieren. Besonders gute Ergebnisse werden jedoch erhalten, wenn zur Ermittlung der Temperaturprofile und/oder der Temperaturgradienten die Temperaturen des Abgasstroms in mindestens 2 Ebenen, insbesondere 2 bis 10 Ebenen, vorzugsweise 2 bis 5 Ebenen, bevorzugt 2 oder 3 Ebenen, besonders bevorzugt 2 Ebenen, ermittelt werden. Zur Ermittlung aussagekräftiger Temperaturprofile sowie der Temperaturgradienten werden im Rahmen des erfindungsgemäßen Verfahrens mindestens zwei Ebenen benötigt, um die für das erfindungsgemäße Verfahren relevanten Temperaturgradienten bzw.

Temperaturunterschiede zwischen den Ebenen bestimmen zu können. Üblicherweise reichen jedoch zwei Ebenen zur Bestimmung der Temperaturprofile und/oder der Temperaturgradienten des Abgasstromes aus. Es hat sich überraschender Weise herausgestellt, dass trotz der Abgasbehandlung - insbesondere der Einbringung von Reduktionsmitteln und gegebenenfalls Kühlwasser in den Abgasstrom -, welche vorzugsweise zwischen den beiden Ebenen durchgeführt wird, die Temperaturprofile bestimmt und Aussagen über die Abgasgeschwindigkeiten, insbesondere die relativen Abgasgeschwindigkeiten, getroffen werden können, welche eine adaptive Verfahrensführung ermöglichen.

Was die Messung der Temperaturen des Abgasstromes anbelangt, so kann im Rahmen der Erfindung jede geeignet Messmethode verwendet werden. Besonders gute Ergebnisse werden jedoch erhalten, wenn die Temperaturen des Abgasstromes mittels akustischer und/oder optischer Temperaturmessung, vorzugsweise akustischer Temperaturmessung, ermittelt werden.

Besonders bewährt haben sich in diesem Zusammenhang Verfahren zur akustischen Temperaturmessung, insbesondere die akustische Gastemperaturmessung, mit denen über den Feuerungsraumquerschnitt bzw. den Querschnitt der Abgasbehandlungseinrichtung nahe den Eindüsstellen die wahren Gastemperaturen ermittelt und Temperaturprofile berechnet werden können.

Ein erfindungsgemäß bevorzugt eingesetztes System besteht aus mechanisch und elektrisch baugleichen Sender- und Empfängereinheiten, die an den Wänden der Abgasbehandlungseinrichtung stromabwärts zu dem Feuerraum, insbesondere Brennkessel, angebracht sind, und einer externen Steuereinheit. Bei der Messung öffnet ein Ventil (z.B. Magnetventil) eine Druckluftleitung auf der Senderseite, wodurch akustische Signale erzeugt werden. Die Signale werden an der Senderund Empfängerseite zeitgleich aufgezeichnet. Aus den digitalisierten Signalen kann die Schalllaufzeit ermittelt werden. Da die Wegstrecke bekannt ist, erhält man die Schallgeschwindigkeit, die in eine Temperatur, die so genannte Pfadtemperatur, umgerechnet wird. Mit mehreren, kombiniert wirkenden Sender-/Empfängereinheiten in einer Ebene erhält man Mehrpfadkonfigurationen, mit denen die zweidimensionale Temperaturverteilung in einer Ebene unmittelbar und ohne Verzögerung ermittelt werden kann. Durch Vergleich der Temperaturverteilung mehrerer Ebenen ist es möglich ein Gesamttemperaturprofil der Abgase sowie Temperaturgradienten zwischen den einzelnen Ebenen zu ermitteln.

Des Weiteren ist es jedoch auch möglich, das Temperaturprofil auf Grundlage von numerischer Strömungsmechanik in Echtzeit (online CFD, online Computational Fluid Dynamics) zu berechnen.

Das erfindungsgemäße Verfahren, insbesondere die Reduktion der Stickoxide, wird im Allgemeinen in Abwesenheit eines Katalysators durchgeführt. Bei dem erfindungsgemäßen Verfahren entfallen somit die hohen Anschaffungs- und Unterhaltskosten für einen Katalysator zur Reduktion der Stickoxide. Bevorzugt wird das erfindungsgemäße Verfahren als selektive nicht-katalytische Reduktion, insbesondere als SNCR-Verfahren, durchgeführt.

Bei der selektiven nicht-katalytischen Reduktion (Selective Non-Catalytic Reduction, SNCR) von Stickoxiden werden Reduktionsmittel zumeist in wässriger Lösung oder gasförmig in die heißen Abgase bzw. Rauchgase eingedüst. Die Reduktionsmittel reagieren dann mit den Stickoxiden, wie am Beispiel der Reduktionsmittel Ammoniak und Harnstoff anhand der nachfolgenden Reaktionsgleichungen (1) und (2) verdeutlicht, zu molekularem Stickstoff, Wasser und Kohlendioxid.

(NH₂)₂CO + 2 NO + ½ O₂ → 2 N₂ + CO₂ + 2 H₂O (1)

4 NH₃ + 4 NO + O₂ → 4 N₂ + 6 H₂O (2)

Der optimale Temperaturbereich, in der eine signifikante Reduktion der Stickoxide erzielt wird, liegt - abhängig von der Rauchgaszusammensetzung - üblicherweise im Bereich von 950 und 1.100 °C. Oberhalb dieses Temperaturbereichs wird in zunehmenden Maße Ammoniak oxidiert, d. h. es bilden sich zusätzliche Stickoxide.

Bei Temperaturen darunter verringert sich die Reaktionsgeschwindigkeit, wodurch ein so genannter Ammoniak-Schlupf entsteht, der im Verlauf des weiteren Rauchgasweges zur Bildung von Ammoniaksalzen bzw. Ammoniumsalzen und dadurch zu Sekundärproblemen, wie Korrosion, führen kann; der Ammoniak-Schlupf sollte deshalb möglichst gering gehalten werden.

Unter Ammoniak-Schlupf ist insbesondere derjenige Teil des Ammoniaks zu verstehen, welcher nicht mit den Stickoxiden zu elementarem Stickstoff reagiert. Das Ammoniak stammt dabei entweder aus einer Überdosierung von Ammoniak oder ist ein Abbauprodukt der Thermolyse von stickstoffhaltigen Reduktionsmitteln, wie beispielsweise Harnstoff.

Auch im Rahmen der vorliegenden Erfindung ist es im Allgemeinen vorgesehen, dass das Einbringen des Reduktionsmittels in den Abgasstrom derart erfolgt, dass das Reduktionsmittel mit den Stickoxiden reagiert, insbesondere die Stickoxide reduziert, vorzugsweise zu elementarem Stickstoff. Im Rahmen der vorliegenden Erfindung reagiert das Reduktionsmittel vorzugsweise mit den Stickstoffoxiden unter Komproportionieren zu elementarem Stickstoff. Durch die Komproportionierung von Stickoxiden und stickstoffhaltigem Reduktionsmittel zu elementarem Stickstoff und vorzugsweise weiteren gasförmigen Komponenten wird der Entstehung weiterer Abfälle, welche kostspielig entsorgt werden müssen, entgegengewirkt.

Darüber hinaus ist es im Rahmen der vorliegenden Erfindung üblicherweise vorgesehen, dass das Reduktionsmittel in Form einer wässrigen Lösung eingesetzt wird. Besonders gute Ergebnisse werden in diesem Zusammenhang erhalten, wenn Ammoniak und/oder Harnstoff, insbesondere in Form ihrer wässrigen Lösungen, als Reduktionsmittel eingesetzt werden.

Die Einbringung des Reduktionsmittels in die Stickoxide enthaltenden Abgase kann durch eine Vielzahl von technischen Maßnahmen erfolgen. Es hat sich jedoch im Rahmen der vorliegenden Erfindung bewährt, wenn das Reduktionsmittel in feiner Verteilung in den Abgasstrom eingebracht, insbesondere eingesprüht oder eingedüst wird. Insbesondere durch Eindüsung kann eine Feinverteilung des Reduktionsmittels bei gleichzeitig hervorragender Eindringtiefe des Reduktionsmittels in den Abgasstrom bzw. Rauchgasstrom erfolgen, wodurch eine besonders effektive und wirkungsvolle Reduzierung der Stickoxide möglich wird.

Dabei hat es sich als vorteilhaft erwiesen, wenn das Reduktionsmittel mittels Eindüseinrichtungen, insbesondere Eindüslanzen, in den Abgasstrom eingebracht wird. Der zur Eindüsung benötigte Druck wird dabei üblicherweise durch Druckluft oder Dampf erzeugt.

Hierbei ist es möglich, dass jede Eindüseinrichtung eine oder mehrere, insbesondere 1 bis 20, vorzugsweise 1 bis 15, bevorzugt 1 bis 10, besonderes bevorzugt 1 bis 5, Düsen zur Einbringung des Reduktionsmittels in den Abgasstrom aufweist. Durch eine Mehrzahl von Düsen je Eindüseinrichtung wird eine besonders feine und gleichmäßige Verteilung des Reduktionsmittels im Abgasstrom erreicht.

Gleichermaßen hat es sich in dieser Hinsicht als vorteilhaft erwiesen, wenn die Eindüseinrichtungen in 1 bis 10, insbesondere 1 bis 7, vorzugsweise 1 bis 5, Eindüsebenen angeordnet sind. Durch die Anordnung der Eindüseinrichtungen in Eindüsebenen kann gewährleistet werden, dass der gesamte Reaktorquerschnitt bzw. die gesamte Breite des Rauchgasstromes von dem Reduktionsmittel bzw. den Reduktionsmitteln erfasst werden kann.

Darüber hinaus kann es vorgesehen sein, dass jede Eindüsebene 1 bis 20, insbesondere 1 bis 15, vorzugsweise 1 bis 12, Eindüseinrichtungen aufweist.

Im Allgemeinen wird das Reduktionsmittel über 1 bis 200, insbesondere 2 bis 100, vorzugsweise 5 bis 60, Eindüseinrichtungen in den Rauchgasstrom eingebracht.

Im Rahmen der vorliegenden Erfindung ist es weiterhin vorgesehen, dass die Eindüseinrichtungen zur Einbringung des Reduktionsmittels einzeln oder gruppenweise, vorzugsweise einzeln, gesteuert werden.

Im Rahmen der Erfindung wird der Austritt des Reduktionsmittels aus den Eindüseinrichtungen für jede Eindüseinrichtung individuell oder für Gruppen von Eindüseinrichtungen gesteuert. Die einzelnen Eindüseinrichtungen sind hierzu individuell oder zumindest gruppenweise regelbar, da der Abgasstrom, insbesondere der Rauchgasstrom, kein homogenes Gebilde ist, sondern hinsichtlich seiner Temperatur, Zusammensetzung und Geschwindigkeit örtlichen und zeitlichen Schwankungen ausgesetzt ist. Auch können ungleichmäßige Temperaturverteilungen im Rauchgasstrom dadurch entstehen, dass an einigen Stellen selektiv Kühlmittel, insbesondere Kühlwasser, in den Rauchgasstrom eingebracht wird, um die Abgase an diesen Stellen auf einen für die Entstickung optimalen Temperaturbereich zu kühlen.

Um einen besonders effizienten Einsatz des Reduktionsmittels zu gewährleisten, sind die Eindüseinrichtungen daher vorteilhafterweise einzeln regelbar, d. h. die Eindüseinrichtungen können vorteilhafterweise einzeln in Betrieb genommen bzw. abgeschaltet werden. Diese sogenannte Einzellanzenumschaltung ermöglicht es, das Reduktionsmittel stets in Bereiche des Abgasstroms, insbesondere des Rauchgasstroms, einzudüsen, in welchen optimale Temperaturen für die Reaktion des Reduktionsmittels mit den Stickoxiden vorhanden sind.

Besonders gute Ergebnisse werden im Rahmen der vorliegenden Erfindung erhalten, wenn auch die Menge des in den Rauchgasstrom eingebrachten bzw. einzubringenden Reduktionsmittels für jede Eindüseinrichtung einzeln regelbar ist. Auf diese Weise können die Vorteile des erfindungsgemäßen Verfahrens, welches auf einer besonders flexiblen und adaptiven Verfahrensführung auf Basis der Ermittlung der Rauchgasgeschwindigkeiten beruht, voll ausgenutzt werden. In diesem Zusammenhang ist es gleichfalls von Vorteil, wenn auch der Druck und somit die Eindringtiefe des Reduktionsmittels in den Abgasstrom für jede Eindüseinrichtung einzeln geregelt werden kann. Besonders vorteilhaft ist es, wenn die einzelnen Eindüseinrichtungen nicht nur im Hinblick auf ihren Einsatz und die Menge des verwendeten Reduktionsmittels individuell geregelt werden, sondern wenn auch die Zusammensetzung des eingedüsten Reduktionsmittels, d. h. entweder einzelne Reduktionsmittel oder deren Mischungen, individuell auf die jeweiligen Verhältnisse abgestimmt werden können.

Die individuelle Steuerbarkeit sämtlicher Eindüseinrichtungen im Hinblick auf ihre Betriebsparameter sowie die Zusammensetzung des Reduktionsmittels führt zwar zu den besten Ergebnissen, erhöht jedoch auch den prozesstechnischen Aufwand und somit die Kosten der Denitrifikation.

Gleichfalls sehr gute Ergebnisse - jedoch mit einem deutlich geringeren prozesstechnischen Aufwand - werden erhalten, wenn der Einsatz und die Menge des eingebrachten Reduktionsmittels für jede Eindüseinrichtung individuell gesteuert wird, die Zusammensetzung des Reduktionsmittels, insbesondere auch des Mischungsverhältnisses verschiedener Reduktionsmittel, für sämtliche Eindüseinrichtungen jedoch gemeinsam eingestellt wird oder zumindest für Gruppen von Eindüseinrichtungen gemeinsam eingestellt wird. Es hat sich in diesem Zusammenhang bewährt, wenn die einzelnen Eindüseinrichtungen im Hinblick auf die weiteren Betriebsparameter, wie beispielsweise den Druck, individuell geregelt werden können.

Gleichfalls können immer noch sehr gute Ergebnisse erzielt werden, wenn die Eindüseinrichtungen gruppenweise gesteuert werden. Unter einer Gruppe von Eindüseinrichtungen ist dabei eine definierte und/oder gemeinsam ansteuerbare und/oder zusammengefasste Einheit einer Mehrzahl von Eindüseinrichtungen, insbesondere Eindüslanzen, zu verstehen.

Im Rahmen der vorliegenden Erfindung ist es vorgesehen, dass den Ebenen von Sektionen einzelne definierte Eindüseinrichtungen zur Einbringung des Reduktionsmittels und/oder definierte Gruppen von Eindüseinrichtungen zur Einbringung des Reduktionsmittels zugeordnet werden. Den durch die Aufteilung des Abgasstromes in Sektionen sowie den durch die Korrelation einzelner Sektionen parallel zur Strömungsrichtung der Abgase definierten dreidimensionalen Bereichen werden einzeln oder gruppenweise Eindüseinrichtungen zugeordnet. Durch die Zuordnung wird zum einen die Einbringung des Reduktionsmittels sowie gegebenenfalls eines Kühlmittels in den Abgasstrom optimiert. Zum anderen ist es so möglich, durch die Betriebsparameter der jeweiligen Eindüseinrichtungen, insbesondere die bekannte Menge der in den Abgasstrom eingebrachten Reduktionsmittel und Kühlmittelmengen, in Kombination mit dem ermittelten Temperaturprofil der Abgase, Rückschlüsse auf die Rauchgasgeschwindigkeit in den jeweiligen Sektionen bzw. im Bereich zwischen den Sektionen zu ziehen. Die durch die Ebenen von Sektionen bzw. Sektionen aufeinander folgender Ebenen aufgespannten dreidimensionalen Bereiche entsprechen daher vorzugsweise den zuvor definierten dreidimensionalen Bereichen, welche bei der Ermittlung des Temperaturprofils der Abgase definiert wurden.

Gemäß der vorliegenden Erfindung wird die Temperatur des Abgasstroms zumindest in einer Ebene stromaufwärts zu den Eindüseinrichtungen zur Einbringung des Reduktionsmittels und/oder im Bereich der Eindüseinrichtungen, insbesondere zwischen einzelnen Eindüsebenen, zur Einbringung des Reduktionsmittels bestimmt und die Temperatur des Abgasstroms zumindest in einer zweiten Ebene stromabwärts zu den Eindüseinrichtungen zur Einbringung des Reduktionsmittels bestimmt. Die zweite Ebene ist stromabwärts zu den Eindüseinrichtungen zur Einbringung des Reduktionsmittels angeordnet und in dieser Ebene wird die Temperaturverteilung im Abgasstrom nach erfolgter Abgasbehandlung, d. h. nach Einbringen des Reduktionsmittels und gegebenenfalls eines Kühlmittels in den Abgasstrom, bestimmt.

Mit dieser zweiten Ebene kann die Temperaturverteilung im Abgasstrom unter folgenden Bedingungen gemessen werden:
a) ohne Eindüsung des Reduktionsmittels
b) mit Eindüsung des Reduktionsmittels und
c) mit Eindüsung von Kühlmittel.

Die weitere - zuvor erste Ebene genannte - Ebene, in welcher eine Temperaturverteilung im Abgasstrom bestimmt wird, ist stromaufwärts, d. h. in Verfahrensrichtung vor der Eindüsung des Reduktionsmittels angeordnet, oder aber im Bereich der Eindüseinrichtungen zum Einbringen des Reduktionsmittels in den Abgasstrom angeordnet. Insbesondere werden gute Ergebnisse erhalten, wenn diese erste Ebene, in welcher die Temperaturverteilung im Abgasstrom bestimmt wird, stromabwärts zu einer oder zwei Eindüsebenen zur Einbringung des Reduktionsmittels angeordnet ist. Auf diese Weise kann mit minimalem Messaufwand die Steuerung einer Vielzahl von Eindüsebenen erreicht werden. Innerhalb der ersten Ebene kann somit die Temperaturverteilung im Abgasstrom unter folgenden Bedingungen gemessen werden:
a) ohne Eindüsung des Reduktionsmittels
b) mit Eindüsung des Reduktionsmittels

Zwischen der ersten und der zweiten Ebene zur Bestimmung der Temperaturverteilung im Abgasstrom können weitere Ebenen zur Bestimmung der Temperaturverteilung im Abgasstrom angeordnet sein, in welchen die Temperaturverteilung im Abgasstrom bestimmt wird. Dies ist abhängig von der jeweiligen Konstruktion des Feuerungsraumes bzw. des Reaktors zur Durchführung des erfindungsgemäßen Verfahrens. Mit den im Rahmen der vorliegenden Erfindung bevorzugt eingesetzten akustischen Messmethoden zur Bestimmung der Gastemperaturen werden üblicherweise genügend Informationen erhalten, um drei in Strömungsrichtung der Abgase aufeinanderfolgend angeordnete Eindüsebenen zur Eindüsung des Reduktionsmittels zu steuern.

Falls zusätzlich zur Einbringung des Reduktionsmittels noch Kühlmittel, insbesondere Kühlwasser, in den Abgasstrom eingebracht wird, so geschieht dies üblicherweise zwischen der ersten und zweiten Ebene, in welcher die Temperaturen des Abgasstroms bestimmt werden. Im Bereich vor der ersten Messebene ist die Einbringung von Kühlmitteln üblicherweise nicht notwendig oder sinnvoll, da bei zu hohen Temperaturen in diesem Bereich die vor der ersten Messebene zur Bestimmung der Temperatur im Abgasstrom angeordneten Eindüsebenen zur Einbringung des Reduktionsmittels in den Abgasstrom abgeschaltet werden und die Abgasbehandlung weiter stromaufwärts, nachfolgend zur ersten Ebene, in welcher die Temperaturverteilung im Abgasstrom bestimmt wird, durchgeführt wird.

Mit dieser speziellen Steuerung kann somit in allen Betriebsfällen die Temperatur unter Einfluss der eingedüsten Flüssigkeiten, insbesondere das Reduktionsmittel-Wasser-Gemisch und das Kühlwasser, gemessen und für zwischen zwei Messebenen gelegenen Bereichen Temperaturgradienten und folglich die Rauchgasgeschwindigkeiten berechnet werden, wodurch die Menge an Reduktionsmittel und Kühlwasser im Hinblick auf die Stickoxidabscheidung und den Ammoniak-Schlupf optimiert werden kann. Gleichfalls können auch die Umschaltpunkte, d. h. der Zeitpunkt, zu welchem einzelne Eindüseinrichtungen an- bzw. abgeschaltet werden, sehr viel genauer definiert werden als dies bislang möglich war.

Im Rahmen der vorliegenden Erfindung ist es im Allgemeinen vorgesehen, dass die Eindüseinrichtungen zur Einbringung des Reduktionsmittels in den Abgasstrom, insbesondere einzeln oder gruppenweise, auf Grundlage der ermittelten Temperaturprofile der Abgase und der Geschwindigkeit der Abgase, insbesondere der ermittelten Temperaturgradienten der Abgase, gesteuert werden. Im Rahmen der vorliegenden Erfindung ist es auf Basis der ermittelten Temperaturprofile der Abgase sowie der daraus abgeleiteten Geschwindigkeit der Abgase möglich, nicht nur einzelne Lanzen im Hinblick auf den jeweils vorherrschenden optimalen Temperaturbereich zu steuern, d. h. Lanzen im optimalen Temperaturbereich zur Reduktion der Stickoxide anzuschalten und Lanzen in nicht optimalen Temperaturbereichen abzuschalten, sondern auch die Menge des eingebrachten Reduktionsmittels an die jeweiligen ortsabhängigen Gegebenheiten im Abgasstrom anzupassen.

Im Rahmen der vorliegenden Erfindung kann es darüber hinaus weiterhin vorgesehen sein, dass die Eindüsreinrichtung zur Einbringung des Reduktionsmittels in den Abgasstrom zusätzlich auf Grundlage des Lastsignals und/oder eines Vergleichs zwischen einem gemessenen Wert für den Stickoxidrestgehalt des nach der Behandlung resultierenden Reingases einerseits und einem vorgegebenen Sollwert andererseits gesteuert werden.

Unter einem Lastsignal ist dabei im Rahmen der vorliegenden Erfindung die Angabe der jeweiligen Last, bei welcher eine Verbrennungseinrichtung, wie beispielsweise eine Großfeuerungsanlage, insbesondere ein Brennkessel, betrieben wird, zu verstehen. Die Last korrespondiert dabei zu der Leistung, die von der Verbrennungseinrichtung freigesetzt wird, und wird üblicherweise in Prozent angegeben, wobei die Volllast (100 %) der Leistung entspricht, für welche die Verbrennungseinrichtung bei optimaler Verbrennung und Befüllung ausgelegt ist.

Im Rahmen der vorliegenden Erfindung werden die Grund- bzw. Grobeinstellungen des erfindungsgemäßen Verfahrens bevorzugt auf Grundlage des Lastsignals sowie eines Vergleichs zwischen dem erhaltenen Reingaswert und dem Sollwert für das Reingas eingestellt. Dies ist bislang in Verfahren des Standes der Technik übliche Vorgehensweise, um die in den Abgasstrom eingebrachte Reduktionsmittelmenge zu steuern. Im Rahmen der vorliegenden Erfindung wird jedoch diese Steuerung bzw. Regelung über das Lastsignal sowie den Stickoxidrestgehalt des Reingases vorzugsweise nur zur Grobeinstellung der Abgasbehandlung verwendet. Die Feinjustierung und die adaptive dynamische Verfahrensführung, welche eine simultane Anpassung an die jeweils im Rauchgasstrom herrschenden Bedingungen erlaubt, werden auf Grundlage der ermittelten Temperaturgradienten und der daraus abgeleiteten Rauchgasgeschwindigkeiten vorgenommen, so dass die Reduktionsmittelmenge stets an die aktuell im Abgasstrom vorherrschenden Bedingungen angepasst wird. Hierdurch ist es insbesondere möglich, auf Schwankungen der NOx-Fracht innerhalb des Abgasstromes einzugehen, d. h. in Bereichen mit einer hohen NOx-Fracht und einer hohen Rauchgasgeschwindigkeit wird vermehrt Reduktionsmittel eingebracht, während in Bereichen mit einer langsameren Rauchgasgeschwindigkeit und somit einer geringeren NOx-Fracht weniger Reduktionsmittel eingebracht wird.

Was nun die Temperaturen anbelangt, in welchen die Einbringung des Reduktionsmittels in den Abgasstrom erfolgt, so können diese in Abhängigkeit von jeweiligen konstruktiven Gegebenheiten sowie der Last des Kessels in weiten Bereichen variieren. Besonders gute Ergebnisse werden jedoch im Rahmen der vorliegenden Erfindung erhalten, wenn die Einbringung des Reduktionsmittels in den Abgasstrom bei Temperaturen im Bereich von 750 bis 1.200 °C, insbesondere 800 bis 1.150 °C, vorzugsweise 850 bis 1.100 °C, durchgeführt wird. In den zuvor genannten Bereichen wird eine besonders rasche und vollständige Reaktion des Reduktionsmittels mit den Stickoxiden erhalten, wobei die Temperaturen einerseits hoch genug sind, um eine rasche Reaktion zu gewährleisten und den Ammoniak-Schlupf zu vermindern, und andererseits niedrig genug sind, um eine Oxidation des Reduktionsmittels zu Stickoxiden zu verhindern.

Was die Menge der Reduktionsmittel in Bezug auf die Mengen an Stickoxiden in den Abgasen anbelangt, so kann diese in weiten Bereichen variieren. Im Rahmen der vorliegenden Erfindung werden jedoch besonders gute Ergebnisse erhalten, wenn das Reduktionsmittel, insbesondere Ammoniak und Harnstoff, in solchen Mengen in den Abgasstrom eingebracht werden, dass das molare Verhältnis, insbesondere Äquivalentverhältnis, zwischen insgesamt eingesetztem Reduktionsmittel einerseits und zu reduzierenden Stickoxiden andererseits im Bereich von 1 : 1 bis 5 : 1, insbesondere 2 : 1 bis 4 : 1, vorzugsweise etwa 2,5 : 3,5, eingestellt wird. Das Äquivalentverhältnis bezieht sich dabei auf Ammoniakäquivalente, welche sich danach richten, in wie viele Ammoniakmoleküle bzw. NH₂-Radikale die eingesetzten stickstoffhaltigen Reduktionsmittel zerfallen. So entspricht ein Molekül Harnstoff zwei Ammoniakäquivalenten, da ein Molekül Harnstoff bei der Thermolyse in zwei NH₂-Radikale zerfällt.

Besonders gute Ergebnisse werden im Rahmen der vorliegenden Erfindung erhalten, wenn als Reduktionsmittel mindestens zwei voneinander verschiedene stickstoffhaltige Reduktionsmittel, insbesondere Ammoniak und Harnstoff, verwendet werden. In diesem Zusammenhang hat es sich im Rahmen der vorliegenden Erfindung bewährt, wenn die voneinander verschiedenen Reduktionsmittel unter verschiedenen Reaktionsbedingungen mit den Stickoxiden reagieren, insbesondere unter voneinander verschiedenen Temperaturen bzw. unter voneinander verschiedenen kinetischen und/oder thermodynamischen Bedingungen.

Die voneinander verschiedenen Reduktionsmittel unterscheiden sich somit vorzugsweise nicht nur in ihrer chemischen Zusammensetzung, sondern auch in ihren physikalischen Eigenschaften bzw. ihren bevorzugten Reaktionstemperaturen und Reaktionsgeschwindigkeiten. Auf diese Weise ist es möglich, durch gezielte Mischung der mindestens zwei unterschiedlichen Reduktionsmittel ein neuartiges Reduktionsreagens zu schaffen, welches individuell sowie flexibel an den jeweiligen Anwendungsfall angepasst werden kann. Idealerweise unterscheiden sich die eingesetzten Reduktionsmittel dabei so weit in ihren Eigenschaften, dass durch deren Mischung ein möglichst breiter optimaler Wirkungsbereich erhalten werden kann.

Was die Einbringung der Reduktionsmittel in die Stickoxide enthaltenden Abgase anbelangt, so hat es sich als vorteilhaft erwiesen, wenn mindestens ein Reduktionsmittel in Form einer wässrigen Lösung eingesetzt wird. Noch bessere Ergebnisse werden jedoch erhalten, wenn alle Reduktionsmittel in Form wässriger Lösungen eingesetzt werden. Durch die Verwendung wässriger Lösungen und die gezielte Variation der Konzentrationen an Reduktionsmitteln in den jeweiligen Lösungen kann die Eindringtiefe der Reduktionsmittel in den Rauchgasstrom gezielt gesteuert werden, wodurch eine maßgeschneiderte und effiziente Verwendung der Reduktionsmittel ermöglicht wird.

Vorzugweise werden als voneinander verschiedene Reduktionsmittel Ammoniak einerseits und Harnstoff andererseits, insbesondere in Form ihrer wässrigen Lösungen, eingesetzt.

In SNCR-Verfahren des Standes der Technik werden üblicherweise entweder wässrige Harnstofflösung oder Ammoniakwasser als Reduktionsmittel verwendet. Für eine optimale Stickoxidabscheidung bei minimalem Ammoniak-Schlupf muss das Reduktionsmittel mit den Rauchgasen gleichmäßig im optimalen Temperaturbereich durchmischt werden. Um den Impuls für die vollkommene Durchmischung zu erreichen, ist dabei für Ammoniakwasser ein erheblich höherer Energieaufwand erforderlich als für Harnstoff, da Ammoniak einen deutlich höheren Dampfdruck aufweist.

Darüber hinaus weisen wässrige Lösungen von Harnstoff und Ammoniak eine unterschiedliche Reaktionskintetik auf, was insbesondere darauf beruht, dass der in Wasser gelöste Harnstoff erst dann in reaktionsfähige Radikale gespalten werden kann, wenn das Wasser, welches die Harnstoffteilchen umgibt, komplett verdampft ist, weshalb mit relativ geringem Energieaufwand eine hohe Eindringtiefe in die Abgase sichergestellt wird.

Bei der Verwendung von wässrigen Ammoniaklösungen dagegen dampft das Ammoniak unmittelbar nach Eintritt in die Rauchgase aus den einzelnen Wassertröpfchen aus, so dass die Reaktion vorzugsweise in der Nähe der Kesselwände stattfindet. So erreicht der Partialdruck von Ammoniak bei 38 °C bereits 1 bar. Der für die optimale Eindringtiefe der Reduktionsmittel notwendige Impuls kann bei dem dann gasförmig vorliegenden Ammoniak wegen der gegenüber einem Wassertropfen geringen Masse nur durch einen höheren Energieaufwand erreicht werden, wozu die entsprechende Dampf- bzw. Luftmenge deutlich erhöht werden muss. Zusätzlich zu den höheren Betriebskosten, die sich aufgrund der höheren Energieverbräuche ergeben, sind die Investitionskosten für eine mit Ammoniakwasser betriebene Anlage aufgrund der Sicherheitsanforderungen wesentlich höher, da Ammoniak ein giftiges Gas ist, welches sich bei Umgebungstemperatur leicht in Wasser lösen lässt.

Ammoniakwasser wird daher der Wassergefährdungsklasse 2 zugeordnet und unterliegt darüber hinaus wegen des hohen Gefährdungspotentials für die Umwelt den technischen Richtlinien für Dampfkessel.

Wegen der chemischen Bindung von Ammoniak im Harnstoffmolekül können dagegen Harnstofflösungen bis 106 °C erwärmt werden, ohne dass Ammoniakgas ausdampft. Die Zerlegung von Harnstoff in Ammoniak- und Kohlendioxidgas beginnt erst ab 130 °C und erreicht ein Maximum bei ca. 380 °C. Da diese hohen Temperaturen bei der Lagerung nicht erreicht werden können, sind die für Ammoniakwasser notwendigen Sicherheitsvorkehrungen nicht nötig. Harnstofflösung ist gemäß des Wasserhaushaltsgesetzes (WHG) nur der Wassergefährdungsklasse 1 zuzuordnen (d.h. es muss nur sichergestellt sein, dass Harnstoff nicht in das Grundwasser gelangen kann, wozu eine Auffangwanne für den Lagertank ausreichend ist).

Harnstofflösungen besitzen jedoch den Nachteil, dass bei einer Überdosierung von Harnstoff sich dieser in fester Form auf Teilen der Anlage ablagert und zu unerwünschter Korrosion führt. Dies gilt umso mehr, als Anlagen zur Durchführung von SNCR-Verfahren relativ unmittelbar nach den Brennkammern installiert sind, d. h. noch vor den üblicherweise vorhandenen Wärmetauschern. Bei hohen Lasten bzw. bei einer hohen Leistung des Brennkessels kann dann eine Eindüsung der Harnstofflösung in den Bereich der Wärmetauscher erforderlich sein, um eine effiziente Reduktion der Stickoxide zu ermöglichen. Dies birgt jedoch die Gefahr, dass sich fester Harnstoff auf den Wärmetauschern ablagert und so zu einer Korrosion der Teile führt, welches die Lebensdauer der Anlage verringert und die Betriebskosten deutlich erhöht.

Die Verwendung von Ammoniaklösungen besitzt generell den Vorteil, dass diese im großtechnischen Maßstab kostengünstig zu beziehen sind, wodurch das erfindungsgemäße Verfahren sehr kostengünstig durchführbar ist, und dass Ammoniak unmittelbar aus der wässrigen Lösung verdampft und schon nahe der Reaktorwand mit den Stickoxiden reagiert. Der letztgenannte Vorteil ist jedoch auch ein Nachteil, da es sich oftmals als schwierig oder unmöglich gestaltet, mit Ammoniaklösungen eine Eindringtiefe in den Rauchgasstrom zu erzielen, welche eine effiziente Reduktion der Stickoxide erlaubt.

Harnstofflösungen besitzen hingegen den Vorteil, dass mit ihnen eine hohe Eindringtiefe in den Rauchgasstrom erreicht werden kann, da der Harnstoff erst nach Verdampfen des gesamten Wassers in NH₂-Radikale zersetzt wird und mit den Stickoxiden reagieren kann. Andererseits besteht jedoch bei Harnstofflösungen die Gefahr der Korrosion von Anlagenteilen, insbesondere bei Einsatz in der Nähe der Wärmetauscher.

Durch gezielte Kombination der beiden vorgenannten Reduktionsmittel, insbesondere an jeweils vorteilhaften Wirkorten, lassen sich aber die jeweiligen Nachteile des einzelnen Reduktionsmittels vermeiden und gezielt die jeweiligen Vorteile ausnutzen. Dies gilt insbesondere dann, wenn Mischungen von Ammoniak- und Harnstofflösungen verwendet werden.

Wenn im Rahmen der vorliegenden Erfindung Ammoniak als eines der Reduktionsmittel eingesetzt wird, wird das Ammoniak vorzugsweise in Form einer 10 bis 35 Gew.-%, insbesondere 15 bis 30 Gew.-%, vorzugsweise 20 bis 30 Gew.-%, bevorzugt etwa 25 Gew.-%, NH₃ enthaltenden, insbesondere wässrigen Lösung bereitgestellt bzw. eingesetzt.

Falls Harnstoff als eines der Reduktionsmittel zur Verminderung des Stickoxidgehalts der Abgase verwendet wird, so hat es sich im Rahmen der vorliegenden Erfindung als vorteilhaft erwiesen, wenn der Harnstoff in Form einer 10 bis 50 Gew.-%, insbesondere 20 bis 50 Gew.-%, vorzugsweise 30 bis 50 Gew.-%, bevorzugt 40 bis 45 Gew.-%, Harnstoff enthaltenden, insbesondere wässrigen Lösung bereitgestellt bzw. eingesetzt wird, bezogen auf die Lösung.

Gleichfalls kann es vorgesehen sein, dass die wässrige Harnstofflösung bzw. die wässrige ammoniakalische Lösung vor Einbringen der Lösung(en) in den Abgasstrom mit zusätzlichem Wasser versetzt werden.

Sowohl Ammoniak- als auch Harnstofflösungen sind in vorgenannten Konzentrationsbereichen kommerziell erhältlich und gut lagerbar. Die optionale zusätzliche Zugabe von weiterem Prozesswasser zu den jeweiligen Grundmischungen erlaubt ein gezieltes Einstellen der Eindringtiefe der Reduktionsmittel in das Rauchgas und ermöglicht ein exaktes Einstellen der Tröpfchengröße der in den Abgasstrom eingebrachten Lösungen der Reduktionsmittel. Hierdurch wird gleichfalls die Reaktionskinetik positiv beeinflusst.

Was die Einbringung der Reduktionsmittel in die Stickoxide enthaltenden Abgase anbelangt, kann es darüber hinaus vorgesehen sein, dass die voneinander verschiedenen Reduktionsmittel, insbesondere Ammoniak und Harnstoff, zeitlich und/oder räumlich getrennt voneinander in den Abgasstrom eingebracht werden.

Gleichermaßen kann es jedoch auch vorgesehen sein, dass die voneinander verschiedenen Reduktionsmittel gemeinsam in den Abgasstrom eingebracht werden, insbesondere nach vorheriger Mischung.

Dabei hat es sich im Rahmen einer möglichst effizienten und wirkungsvollen Reduktion der Stickoxide in den Abgasen als vorteilhaft erwiesen, wenn die voneinander verschiedenen Reduktionsmittel im Verlauf des Verfahrens sowohl zeitlich und/oder räumlich voneinander getrennt als auch nach vorheriger Mischung gemeinsam in den Rauchgasstrom eingebracht werden.

Das erfindungsgemäße Verfahren erlaubt somit eine äußerst flexible und an die jeweiligen Verfahrensbedingungen anpassbare Einbringung der Reduktionsmittel in den Abgasstrom, insbesondere Rauchgasstrom. Dabei ist es möglich, dass im Laufe des Verfahrens die Reduktionsmittel einzeln oder aber als Mischungen eingesetzt werden, d. h. im Laufe des Verfahrens kann bevorzugt zwischen der Einbringung eines einzelnen Reduktionsmittels und der Einbringung von Mischungen der Reduktionsmittel gewechselt werden. Neben dieser zeitlichen Trennung des Einbringens der Reduktionsmittel bzw. deren Mischungen ist auch eine örtlich getrennte Einbringung der Reduktionsmittel bzw. ihrer Mischungen möglich. Hierzu kann an einer Stelle des Reaktors beispielsweise ein einzelnes Reduktionsmittel eingebracht werden, während an einer anderen Stelle das andere Reduktionsmittel bzw. eine Mischung von Reduktionsmitteln eingebracht wird.

Wenn im Rahmen der vorliegenden Erfindung Ammoniak und Harnstoff als Reduktionsmittel verwendet werden, so können besonders gute Ergebnisse erhalten werden, wenn Ammoniak und Harnstoff mit einem gewichtsbezogenen Ammoniak/Harnstoff-Verhältnis von 99 : 1 bis 1 : 99, insbesondere 95 : 5 bis 5 : 95, vorzugsweise 9 : 1 bis 1 : 9, bevorzugt 7 : 1 bis 1 : 7, weiter bevorzugt 4 : 1 bis 1 : 6, noch weiter bevorzugt 2 : 1 bis 1 : 5, in den Abgasstrom eingebracht werden. Dies gilt insbesondere bei gemeinsamer Einbringung von Ammoniak und Harnstoff. In den vorgenannten Bereichen ist eine besonders hohe Effizienz in der Entstickung von Abgasen und eine synergistische Wirkungsweise zwischen Ammoniak einerseits und Harnstoff andererseits zu beobachten, welcher sich nicht nur in einer deutlichen Reduzierung der Stickoxide, sondern darüber hinaus auch in einem deutlich geringeren Verbrauch an Reduktionsmitteln niederschlägt.

Was das eingesetzte Verhältnis der Reduktionsmittel zueinander weiterhin anbelangt, so kann es im Rahmen der vorliegenden Erfindung vorgesehen sein, dass die gewichtsbezogenen Verhältnisse der Reduktionsmittel zueinander, insbesondere die gewichtsbezogenen Verhältnisse der Mischung der Reduktionsmittel, und/oder die Konzentrationen der wässrigen Lösungen der Reduktionsmittel für alle Eindüsebenen identisch eingestellt werden und/oder für einzelne, insbesondere jede Eindüseinrichtung und/oder für Gruppen von Eindüseinrichtungen, vorzugsweise für jede Eindüseinrichtung individuell, eingestellt werden.

Das erfindungsgemäße Verfahren, wie es zuvor geschildert ist, ermöglicht eine gegenüber Verfahren des Standes der Technik deutlich verbesserte Reduktion der Stickoxide in Abgasen bei gleichzeitiger Verminderung der eingesetzten Mengen an Reduktionsmitteln.

Im Rahmen der vorliegenden Erfindung können besonders gute Ergebnisse erhalten werden, wenn gleichzeitig mit und/oder zeitlich vor, insbesondere gleichzeitig mit, der Einbringung des Reduktionsmittels in den Abgasstrom eine selektive Kühlung der Abgase durchgeführt wird. In diesem Zusammenhang kann es insbesondere vorgesehen sein, dass mindestens ein Kühlmittel in den Strom der Abgase eingebracht und/oder mit diesem in Kontakt gebracht wird.

Im Rahmen der vorliegenden Erfindung kann es somit vorgesehen sein, dass gleichzeitig mit der Entstickung die Abgase aus technischen Prozessen, insbesondere Rauchgase, abgekühlt werden. Durch die selektive Kühlung der Abgase werden diese optimal auf die weitergehende Abgasbehandlung vorbereitet. Insbesondere wird gewährleistet, dass die Abgasbehandlung, insbesondere die Entfernung bzw. Abscheidung der Stickoxide aus den Abgasen, in einem optimalen Temperaturbereich erfolgt. Die selektive Kühlung der Rauchgase ist insbesondere dann von Bedeutung, wenn bestehende Brennkessel mit SNCR-Anlagen ausgerüstet werden, da in diesen Brennkesseln die konstruktiven Gegebenheiten, insbesondere der Abstand zwischen dem eigentlichen Feuerungsraum und den Wärmetauschern für die Durchführung des SNCR-Verfahrens oftmals nicht optimal ist. So kommt es beispielsweise häufig vor, dass das optimale Temperaturfenster für die Einbringung des Reduktionsmittels in den Abgasstrom im Bereich der Wärmetauscher oder in anderweitig nur schwer zugänglichen Bereichen der Anlage liegt. Durch eine selektive Kühlung der Abgase, insbesondere Rauchgase, ist es jedoch möglich, die Temperaturen im Abgasstrom derart einzustellen, dass das optimale Temperaturfenster zur Entstickung der Rauchgase in einen der Einbringung von Reduktionsmitteln leicht zugänglichen Bereich verlagert wird.

Durch die selektive Abkühlung der Abgase können auch große Temperaturschieflagen, d. h. starke Temperaturunterschiede im Rauchgasstrom, ausgeglichen werden, so dass eine effiziente Entfernung bzw. Abscheidung der Stickoxide aus den Rauchgasen erfolgen kann. Im Rahmen der vorliegenden Erfindung ist es im Allgemeinen vorgesehen, dass durch die Einbringung des Kühlmittels in den Abgasstrom der Abgasstrom insgesamt oder bereichsweise abgekühlt wird. In diesem Zusammenhang kann es vorgesehen sein, dass der gesamte Querschnitt des Abgasstroms gekühlt bzw. abgekühlt wird und/oder dass ausgewählte Bereiche des Querschnitts, insbesondere orthogonal zur Strömungsrichtung des Abgasstroms, abgekühlt werden.

Unter dem Begriff der "bereichsweisen" Kühlung des Abgasstroms soll im Rahmen der vorliegenden Erfindung verstanden werden, dass durch die Einbringung des Kühlmittels in den Abgasstrom zumindest einzelne Sektionen oder Bereiche einer Ebene, welche senkrecht (orthogonal) zur Strömungsrichtung der Abgase verläuft, abgekühlt werden.

Besonders gute Ergebnisse im Hinblick auf die Abscheidung bzw. Entfernung der Stickoxide aus den Abgasen werden erreicht, wenn die Abgase insbesondere zumindest bereichsweise auf Temperaturen im Bereich von 750 bis 1.200 °C, insbesondere 800 bis 1.150 °C, vorzugsweise 850 bis 1.100 °C, abgekühlt werden.

In diesem Zusammenhang kann es vorgesehen sein, dass der gesamte Querschnitt des Abgasstroms abgekühlt wird und/oder dass ausgewählte Bereiche des Querschnitts des Abgasstroms abgekühlt werden.

In den zuvor genannten Temperaturbereichen wird eine besonders gute Reaktion der Reduktionsmittel mit den in den Abgasen enthaltenden Stickoxiden erreicht, so dass in diesen Temperaturbereichen die Stickoxidabscheiderate besonders hoch ist, während gleichzeitig der Ammoniak-Schlupf sowie der Reduktionsmittelverbrauch besonders gering sind.

Eine bereichsweise Kühlung auf die vorgenannten Temperaturen kommt insbesondere immer dann in Betracht, wenn Teile des Abgasstroms einen konstruktionsbedingt schwer zugänglichen Teil der Anlage durchlaufen, in welchem jedoch der optimale Temperaturbereich für eine Reduktion der Stickoxide liegt. Dieser spezielle Teil der Abgase kann dann vor Eintritt in die schwer- oder unzugänglichen Bereiche gezielt abgekühlt und mit Reduktionsmitteln behandelt werden, während die anderen Bereiche des Abgasstroms nicht abgekühlt und/oder mit Reduktionsmitteln behandelt werden. Bevorzugt wird jedoch stets - wenn möglich - ein möglichst gleichmäßiges Temperaturprofil des Abgasstroms.

Im Rahmen der vorliegenden Erfindung ist es jedoch im Allgemeinen vorgesehen, dass die Kühlung und somit die Einbringung des Kühlmittels, insbesondere die Einbringung von Kühlwasser, in den Abgasstrom möglichst gering gehalten wird, da durch die Einbringung des Kühlmittels die Effizienz beispielsweise von Heizkraftwerken deutlich verschlechtert wird.

Üblicherweise handelt es sich bei dem Kühlmittel um eine Kühlflüssigkeit, insbesondere um eine nichtentzündbare und/oder eine inerte Kühlflüssigkeit, vorzugsweise Wasser. Wasser wird im Allgemeinen als Kühlflüssigkeit bzw. als Kühlmittel bevorzugt, da es kostengünstig erhältlich und in großen Mengen verfügbar ist. Darüber hinaus wird Wasser bei den meisten SNCR-Verfahren bereits zum Lösen der Reduktionsmittel bzw. zum Einstellen eines spezifischen Gehalts an Reduktionsmitteln in der Reduktionsmittellösung verwendet. Bei einer Verwendung von Wasser als Kühlmittel kann somit prinzipiell auf das gleiche Wasserreservoir bzw. die gleichen Anlagenteile zur Wasserversorgung wie bei der Einstellung der Reduktionsmittel zurückgegriffen werden.

Im Rahmen der vorliegenden Erfindung werden besonders gute Ergebnisse erhalten, wenn das Kühlmittel in feiner Verteilung in den Abgasstrom eingebracht wird, insbesondere eingesprüht oder eingedüst wird. Als besonders effizient hat sich hierbei eine Eindüsung des Kühlmittels erwiesen, da in Abhängigkeit der Ausbildung der Düsen sowie einer darauf abgestimmten Druckbeaufschlagung und Durchflussmenge ein besonders optimales Tropfenspektrum sowie eine flexibel einstellbare Eindringtiefe des Kühlmittels in die Rauchgase erreicht werden kann. Der zur Eindüsung benötigte Druck wird dabei üblicherweise durch Druckluft oder Dampf erzeugt.

Im Rahmen der vorliegenden Erfindung wird das Kühlmittel üblicherweise mittels Eindüseinrichtungen, insbesondere Eindüslanzen, in den Abgasstrom eingebracht. In diesem Zusammenhang hat es sich als besonders vorteilhaft erwiesen, wenn jede Eindüseinrichtung eine oder mehrere, insbesondere 1 bis 20, vorzugsweise 1 bis 15, bevorzugt 1 bis 10, besonders bevorzugt 1 bis 5, Düsen zur Einbringung des Kühlmittels in den Abgasstrom aufweist. Durch eine hohe Anzahl von Düsen kann eine besonders gleichmäßige Verteilung des Kühlmittels über den gesamten Querschnitt des Abgasstroms erreicht werden.

Eine besonders effiziente Abkühlung des Abgasstroms wird insbesondere dann erreicht, wenn die Eindüseinrichtungen in 1 bis 10, insbesondere 1 bis 7, vorzugsweise 1 bis 5, bevorzugt 1 bis 3, Eindüsebenen, besonders bevorzugt in einer Eindüsebene, angeordnet sind. Für die Mehrzahl der Anwendungen reicht es aus, wenn eine Eindüsebene zur Einbringung des Kühlmittels in den Abgasstrom vorhanden ist. Sollte es jedoch nicht möglich sein, das gewünschte Temperaturprofil bzw. die gewünschte Temperaturabsenkung mit nur einer Eindüsebene zu erreichen, können auch mehrere Eindüsebenen vorgesehen sein, wobei gegebenenfalls Temperaturbestimmungen zwischen den einzelnen Ebenen erfolgen können und auch Reduktionsmittel in den Rauchgasstrom eingebracht werden kann.

Eine Anordnung der Eindüseinrichtungen in Eindüsebenen vorzugsweise senkrecht zur Strömungsrichtung des Abgasstroms ermöglicht eine besonders gleichmäßige Verteilung des Kühlmittels und somit eine besonders gleichmäßige Abkühlung des Abgasstroms. Von dieser Anordnung kann jedoch abgewichen werden, wenn beispielsweise nur ein Teil des Abgasstroms gekühlt werden soll, beispielsweise wenn dieser Bereich später mit weiteren Eindüseinrichtungen nicht mehr zu erreichen ist, wie zwischen den Wärmetauschern bzw. Heizflächen von Brennkesseln.

In diesem Zusammenhang kann es vorgesehen sein, dass jede Eindüsebene 1 bis 20, insbesondere 1 bis 15, vorzugsweise 1 bis 12, Eindüseinrichtungen aufweist. Gleichfalls kann es auch vorgesehen sein, dass das Kühlmittel über 1 bis 200, insbesondere 1 bis 100, vorzugsweise 1 bis 60, bevorzugt 1 bis 36, besonders bevorzugt 1 bis 12, Eindüseinrichtungen in den Abgasstrom eingebracht wird.

Besonders gute Ergebnisse werden im Rahmen der vorliegenden Erfindung erhalten, wenn die Eindüseinrichtungen einzeln und/oder gruppenweise, vorzugsweise einzeln, gesteuert werden. In diesem Zusammenhang hat es sich bewährt, wenn der Austritt des Kühlmittels aus den Eindüseinrichtungen für jede Eindüseinrichtung individuell und/oder für Gruppen von Eindüseinrichtungen gesteuert wird.

In diesem Zusammenhang hat es sich gleichfalls bewährt, wenn den Ebenen von Sektionen und/oder den Ebenen des Abgasstroms - wie sie zuvor bei der Bestimmung der Temperaturgradienten beschrieben wurden - definierte einzelne Eindüseinrichtungen zur Einbringung des Kühlmittels in den Abgasstrom und/oder definierte Gruppen von Eindüseinrichtungen zur Einbringung des Kühlmittels in den Abgasstrom zugeordnet werden. Die Zuordnung der Eindüseinrichtungen zur Einbringung des Kühlmittels zu den zuvor definierten Sektionen bzw. Ebenen von Sektionen ermöglicht es, zwischen den einzelnen Sektionen auf Basis der bestimmten Temperaturgradienten die Rauchgasgeschwindigkeit zu ermitteln und somit die erfindungsgemäße verbesserte Verfahrensführung durchzuführen.

Im Rahmen der vorliegenden Erfindung ist es im Allgemeinen vorgesehen, dass verschiedene Eindüseinrichtungen für das Kühlmittel und für das Reduktionsmittel verwendet werden, insbesondere in verschiedenen Eindüsebenen. Auf diese Weise wird im Rahmen der vorliegenden Erfindung sichergestellt, dass die Abkühlung der Abgase unabhängig von der Eindüsung bzw. Einbringung des Reduktionsmittels in den Abgasstrom erfolgt bzw. unabhängig von dieser regelbar ist.

Gemäß einer besonderen Ausführungsform der vorliegenden Erfindung ist es vorgesehen, dass die Einbringung des Kühlmittels in den Abgasstrom derart erfolgt, dass ein gewünschtes, insbesondere zuvor festgelegtes, Temperaturprofil des Abgasstroms, insbesondere in mindestens einer Ebene orthogonal zur Strömungsrichtung des Abgasstroms, eingestellt wird. In diesem Zusammenhang kann es vorgesehen sein, dass ein gleichmäßiges Temperaturprofil, insbesondere mit einer einheitlichen Temperatur und/oder einem engen Temperaturintervall, über den gesamten Querschnitt des Abgasstroms eingestellt wird und/oder dass ein Temperaturprofil mit einer ungleichmäßigen Temperaturverteilung eingestellt wird.

Weiterhin kann es im Rahmen der vorliegenden Erfindung vorgesehen sein, dass das Kühlmittel und das Reduktionsmittel alternierend und/oder in festgelegter Abfolge, vorzugsweise in räumlich und/oder zeitlich, bevorzugt räumlich, festgelegter Abfolge in den Abgasstrom eingebracht wird. Was die räumliche Abfolge der Einbringung des Reduktionsmittels und des Kühlmittels anbelangt, so hat es sich als vorteilhaft erwiesen, wenn das Kühlmittel erstmalig stromabwärts zu der am weitesten stromaufwärts gelegenen Eindüseinrichtung zur Einbringung des Reduktionsmittels in den Abgasstrom eingebracht wird. Es hat sich gezeigt, dass eine selektive Kühlung der Rauchgase stromaufwärts oftmals nicht notwendig ist. Vielmehr wird eine deutlich höhere Effizienz erzielt, wenn zu Beginn der Abgasbehandlung Eindüseinrichtungen zur Einbringung des Reduktionsmittels in den Abgasstrom vorgesehen werden, welche gegebenenfalls bei zu hohen Temperaturen abgeschaltet werden. Weiter stromabwärts kann dann eine selektive und zumindest bereichsweise Kühlung der Abgase erfolgen, falls dies notwendig sein sollte, insbesondere um eine vollständige Umsetzung der Stickoxide in den Abgasen mit dem Reduktionsmittel vor Erreichen der Wärmetauscher zu gewährleisten. Auf diese Weise wird der Kühlmittelverbrauch, insbesondere der Kühlwasserverbrauch, minimal gehalten.

Was die Einbringung des Kühlmittels in den Abgasstrom anbelangt, so hat es sich bewährt, wenn die Einbringung des Kühlmittels in den Abgasstrom, insbesondere dessen Menge und/oder der Zeitpunkt der Einbringung, über eine Auswertung des Lastsignals und/oder die Bestimmung der Temperaturprofile des Abgasstroms und/oder die Bestimmung der Temperaturgradienten geregelt wird. Insbesondere wird es in diesem Zusammenhang bevorzugt, wenn die Einbringung des Kühlmittels in den Abgasstrom über eine Auswertung des Lastsignals und über die Bestimmung der Temperaturprofile des Abgasstroms geregelt wird.

Besonders gute Ergebnisse werden erhalten, wenn die Eindüseinrichtungen zur Einbringung des Kühlmittels in den Abgasstrom, insbesondere einzeln oder gruppenweise, auf Grundlage der ermittelten Temperaturprofile des Abgasstroms und/oder der ermittelten Temperaturgradienten des Abgasstroms und/oder des Lastsignals gesteuert werden.

Darüber hinaus hat es sich im Rahmen der vorliegenden Erfindung als vorteilhaft erwiesen, wenn die Eindüseinrichtungen zur Einbringung des Kühlmittels und die Eindüseinrichtungen zur Einbringung des Reduktionsmittels gemeinsam auf Grundlage der ermittelten Temperaturprofile des Abgasstroms und/oder der ermittelten Temperaturgradienten des Abgasstroms und/oder des Lastsignals gesteuert werden. Besonders gute Ergebnisse werden in diesem Zusammenhang erzielt, wenn die Steuerung der Eindüseinrichtungen zur Einbringung des Kühlmittels und die Steuerung der Eindüseinrichtungen zur Einbringung des Reduktionsmittels aufeinander abgestimmt werden. Auf diese Weise kann ein besonders effizienter Reduktionsmittelverbrauch erreicht werden, wobei gleichzeitig die Menge des benötigten Kühlmittels möglichst gering gehalten wird.

Weiterhin kann es im Rahmen der vorliegenden Erfindung vorgesehen sein, dass bei der Messung der Temperaturprofile des Abgasstroms die Verteilung von Stickoxiden, Kohlenmonoxid und Sauerstoff im Abgasstrom bestimmt wird. Geeignete Messverfahren, welche eine Ermittlung der Daten ermöglichen, sind dem Fachmann geläufig. Auf Basis dieser Daten kann die Einbringung des Reduktionsmittels und/oder die Einbringung des Kühlmittels zusätzlich geregelt werden, wobei insbesondere die Effizienz des Entstickungsverfahrens nochmals gesteigert werden kann.

Das erfindungsgemäße Verfahren, wie es zuvor geschildert ist, ermöglicht eine gegenüber Verfahren des Standes der Technik deutlich verbesserte Reduktion der Stickoxide in Abgasen von technischen Prozessen bei gleichzeitiger Verminderung der eingesetzten Mengen an Reduktionsmittel und gegebenenfalls Kühlmittel sowie einem deutlich verringerten Ammoniak-Schlupf.

Nachfolgend wird eine zur Durchführung des erfindungsgemäßen Verfahrens geeignete Vorrichtung beschrieben: eine Vorrichtung (Anlage) zur Behandlung von Stickoxide enthaltenden Abgasen aus technischen Prozessen, wie Rauchgasen, zu Zwecken der Entfernung und/oder Abscheidung der Stickoxide und/oder zu Zwecken der Verringerung des Stickoxidgehalts mittels chemischer Reduktion der Stickoxide, insbesondere eine Vorrichtung (Anlage) zur Entstickung von Abgasen aus großtechnischen Anlagen, vorzugsweise zur Durchführung eines zuvor geschilderten Verfahrens, wobei die Vorrichtung umfasst:
(a) einen Reaktor zum Inkontaktbringen und/oder zur Umsetzung mindestens eines Reduktionsmittels mit den Stickoxide enthaltenden Abgasen, wobei der Reaktor eine Mehrzahl von Eindüseinrichtungen, insbesondere Eindüslanzen, zur Einbringung, insbesondere Eindüsung, von mindestens einem stickstoffhaltigen Reduktionsmittel aufweist, wobei die Eindüseinrichtungen einzeln und/oder gruppenweise, vorzugsweise einzeln, regelbar sind,
(b) Messeinrichtungen zur Ermittlung von Temperaturprofilen des Abgasstroms, insbesondere zu Zwecken der Steuerung der Einbringung des Reduktionsmittels in den Abgasstrom, und
(c) mindestens eine, insbesondere dem Reaktor zugeordnete, vorzugsweise über mindestens eine Zuführleitung mit den Eindüseinrichtungen verbundene, Bevorratungseinrichtung, insbesondere ein Vorratsgefäß, zur Bevorratung und/oder Abgabe mindestens eines Reduktionsmittels.

Wie zuvor bereits im Zusammenhang mit dem erfindungsgemäßen Verfahren ausgeführt, kann es vorgesehen sein, dass der Auslass des Reduktionsmittels aus den Eindüseinrichtungen für jede Eindüseinrichtung individuell und/oder für Gruppen von Eindüseinrichtungen regelbar ist.

Üblicherweise weist jede Eindüseinrichtung zur Einbringung des Reduktionsmittels in den Abgasstrom eine oder mehrere, insbesondere 1 bis 20, vorzugsweise 1 bis 15, bevorzugt 1 bis 10, besonders bevorzugt 1 bis 5, Düsen auf.

In diesem Zusammenhang hat es sich als vorteilhaft erwiesen, wenn die Vorrichtung 1 bis 200, insbesondere 2 bis 100, vorzugsweise 5 bis 60, Eindüseinrichtungen zur Einbringung des Reduktionsmittels in den Abgasstrom aufweist.

Besonders gute Ergebnisse werden erhalten, wenn die Eindüseinrichtungen zur Einbringung des Reduktionsmittels in den Abgasstrom in 1 bis 10, insbesondere 1 bis 7, vorzugsweise 1 bis 5, Eindüsebenen angeordnet sind. In diesem Zusammenhang hat es gleichfalls bewährt, wenn jede Eindüsebene 1 bis 20, insbesondere 1 bis 15, vorzugsweise 1 bis 12, Eindüseinrichtungen zur Einbringung des Reduktionsmittels in den Abgasstrom aufweist.

Bevorzugt sind die Eindüseinrichtungen zur Einbringung, insbesondere Einsprühung, vorzugsweise Eindüsung, wässriger Lösungen des Reduktionsmittels, insbesondere wässriger Ammoniak- und/oder Harnstofflösungen, ausgebildet.

In diesem Zusammenhang hat es sich als vorteilhaft erwiesen, wenn die Vorrichtung umfasst:
(c1) mindestens eine erste, insbesondere dem Reaktor zugeordnete, vorzugsweise über mindestens eine Zuführleitung mit den Eindüseinrichtungen verbundene, Bevorratungseinrichtung, insbesondere ein erstes Vorratsgefäß, zur Bevorratung und/oder Abgabe mindestens eines ersten Reduktionsmittels und
(c2) mindestens eine zweite, insbesondere dem Reaktor zugeordnete, vorzugsweise über mindestens eine Zuführleitung mit den Eindüseinrichtungen verbundene, Bevorratungseinrichtung, insbesondere ein zweites Vorratsgefäß, zur Bevorratung und/oder Abgabe mindestens eines von dem ersten Reduktionsmittel verschiedenen zweiten Reduktionsmittels.

Gleichermaßen hat es sich als vorteilhaft erwiesen, wenn die Messeinrichtungen zur Bestimmung der Temperaturprofile mittels akustischer oder optischer Temperaturmessung, vorzugsweise mittels akustischer Temperaturmessung, ausgebildet sind.

Darüber hinaus kann es auch vorgesehen sein, dass die Messeinrichtungen zur Bestimmung der Temperaturprofile derart ausgebildet sind, dass auch die Verteilung von Stickoxiden, Kohlenmonoxid und Sauerstoff im Abgasstrom bestimmt werden kann.

Was die Messeinrichtungen weiterhin anbelangt, so wird es bevorzugt, wenn die Messeinrichtungen in mindestens zwei Ebenen orthogonal zur Strömungsrichtung der Abgase angeordnet sind. Vorzugsweise sind in diesem Zusammenhang die Messeinrichtungen zur Bestimmung der Temperaturprofile des Abgasstroms in Form von Ebenen, vorzugsweise orthogonal zur Strömungsrichtung der Abgase, ausgebildet.

Was nun die Lage der Messeinrichtungen anbelangt, insbesondere die Lage der Messeinrichtungen im Reaktor anbelangt, so kann diese in Abhängigkeit von den jeweiligen konstruktiven Bedingungen in weiten Bereichen variieren. Besonders gute Ergebnisse werden jedoch erhalten, wenn die Vorrichtung stromabwärts zu den Eindüseinrichtungen zur Einbringung des Reduktionsmittels angeordnet mindestens eine Messeinrichtung zur Bestimmung der Temperaturverteilung der Abgase in Form einer Ebene aufweist. Somit befindet sich eine Messeinrichtung zur Bestimmung der Temperaturverteilung der Abgase in Verfahrensrichtung stromabwärts zu den Eindüseinrichtungen zur Einbringung des Reduktionsmittels und gegebenenfalls zu den Eindüseinrichtungen zur Einbringung des Kühlmittels. Mit dieser Messeinrichtung wird folglich die Temperaturverteilung im Abgasstrom nach erfolgter Abgasbehandlung, insbesondere nach erfolgter Entstickung, bestimmt.

Gleichermaßen wird es bevorzugt, wenn die Vorrichtung stromaufwärts zu den Eindüseinrichtungen zur Einbringung des Reduktionsmittels und/oder stromabwärts zu den am weitesten stromaufwärts gelegenen Eindüseinrichtungen zur Einbringung des Reduktionsmittels angeordnet mindestens eine Messeinrichtung zur Bestimmung der Temperaturverteilung der Abgase in Form einer Ebene aufweist. Es wird bevorzugt, wenn eine erste Bestimmung der Temperaturverteilung der Abgase stromaufwärts zu den Eindüseinrichtungen zur Eindüsung des Reduktionsmittels vorgenommen wird oder stromabwärts zu den am weitesten stromaufwärts gelegenen Eindüseinrichtungen erfolgt, und d. h. in Verfahrensrichtung liegen eine oder mehrere Ebenen mit Eindüseinrichtungen zur Eindbringung des Reduktionsmittels in den Abgasstrom bevor eine erste Messeinrichtung zur Bestimmung der Temperaturverteilung im Abgasstrom im Reaktor angeordnet ist. Es hat sich herausgestellt, dass insbesondere bei Verwendung akustischer Messsysteme zur Bestimmung der Gastemperatur eine Temperaturmessebene ausreicht, um genügend Informationen für drei Eindüsebenen zur Einbringung des Reduktionsmittels zu erhalten.

Vorzugsweise ist es vorgesehen, dass der Reaktor eine Mehrzahl von Eindüseinrichtungen, insbesondere Eindüslanzen, zur Einbringung, insbesondere Eindüsung, mindestens eines Kühlmittels aufweist.

Wenn der Reaktor eine Mehrzahl von Eindüseinrichtungen zur Einbringung mindestens eines Kühlmittels aufweist, so weist die Vorrichtung im Allgemeinen mindestens eine, insbesondere dem Reaktor zugeordnete, vorzugsweise über mindestens eine Zuführleitung mit den Eindüseinrichtungen verbundene, Bevorratungseinrichtung, insbesondere ein Vorratsgefäß, zur Bevorratung und/oder Abgabe mindestens eines Kühlmittels auf.

Besonders gute Ergebnisse werden erhalten, wenn der Auslass des Kühlmittels aus den Eindüseinrichtungen für jede Eindüseinrichtung individuell und/oder für Gruppen von Eindüseinrichtungen regelbar ist. Auf diese Weise kann eine selektive, d. h. örtlich und zeitlich begrenzte, Einbringung von Kühlmittel in den Abgasstrom erreicht werden.

Was nun die Ausgestaltung der Eindüseinrichtung zur Einbringung des Kühlmittels anbelangt, so hat es sich bewährt, wenn jede Eindüseinrichtung zur Einbringung des Kühlmittels in den Abgasstrom eine oder mehrere, insbesondere 1 bis 20, vorzugsweise 1 bis 15, bevorzugt 1 bis 10, besonderes bevorzugt 1 bis 5, Düsen aufweist.

Gleichermaßen wird es bevorzugt, wenn die Eindüseinrichtungen zur Einbringung des Kühlmittels in den Abgasstrom in 1 bis 10, insbesondere 1 bis 7, vorzugsweise 1 bis 5, bevorzugt 1 bis 3, Eindüsebenen, besonders bevorzugt in einer Eindüsebene, angeordnet sind. Besonders gute Ergebnisse werden dabei erhalten, wenn jede Eindüsebene 1 bis 20, insbesondere 1 bis 15, vorzugsweise 1 bis 12, Eindüseinrichtungen zur Einbringung des Kühlmittels in den Abgasstrom aufweist.

Es hat sich herausgestellt, dass besonders gute Ergebnisse erhalten werden, wenn die Eindüseinrichtungen zur Einbringung des Kühlmittels in einer Ebene angeordnet sind, welche unmittelbar stromaufwärts zu der am weitesten stromabwärts gelegenen Eindüsebene zur Einbringung des Reduktionsmittels angeordnet ist. Auf diese Weise können die Temperaturen für die letzte Eindüsebene des Reduktionsmittels nochmals optimal eingestellt werden, wobei gleichzeitig der Kühlmittelverbrauch minimiert wird und die Effizienz der Wärmetauscher und somit beispielsweise eines Heizkraftwerkes nur minimal beeinträchtigt wird.

Darüber hinaus werden gute Ergebnisse erhalten, wenn die Vorrichtung 1 bis 200, insbesondere 1 bis 100, vorzugsweise 1 bis 60, bevorzugt 1 bis 36, besonders bevorzugt 1 bis 12, Eindüseinrichtungen zur Einbringung des Kühlmittels in den Abgasstrom aufweist.

Es ist üblicherweise vorgesehen, dass die Vorrichtung einer Verbrennungseinrichtung, insbesondere einem Brennkessel, nachgeschaltet, insbesondere unmittelbar nachgeschaltet, ist.

Als besonders vorteilhaft hat es sich in diesem Zusammenhang erwiesen, wenn die Vorrichtung zwischen einer Verbrennungseinrichtung und einer Wärmetauscheinrichtung angeordnet ist und/oder dass die Vorrichtung einer Verbrennungseinrichtung, insbesondere einem Brennkessel, nachgeschaltet, ist und sich bis in den Bereich einer Wärmetauscheinrichtung erstreckt. Insbesondere wenn bereits bestehende Brennkessel bzw. Heizkessel mit der Vorrichtung ausgerüstet werden, kann es sich aufgrund der Temperaturverteilung sowie der konstruktiven Gegebenheiten ergeben, dass sich die Vorrichtung, insbesondere die Eindüslanzen, im Bereich der Wärmetauscheinrichtung bzw. der Heizflächen der Anlage, beispielsweise der Großfeuerungsanlage, befinden.

Gleichfalls hat es sich als vorteilhaft erwiesen, wenn die Vorrichtung mindestens eine Wasserbevorratungseinrichtung zur Bevorratung und/oder Abgabe von Wasser aufweist.

Hierbei kann es insbesondere vorgesehen sein, dass die Wasserbevorratungseinrichtung dem Reaktor zugeordnet ist, vorzugsweise über mindestens eine Zuführleitung mit den Eindüseinrichtungen zur Einbringung des Reduktionsmittels verbunden ist.

Weiterhin ist im Allgemeinen vorgesehen, dass die Vorrichtung mindestens eine Gasbevorratungseinrichtung zur Bevorratung und/oder Abgabe von gegebenenfalls komprimierten Gasen, insbesondere von Druckluft, aufweist. In diesem Zusammenhang hat es sich als vorteilhaft erwiesen, wenn die Gasbevorratungseinrichtung dem Reaktor zugeordnet ist, vorzugsweise über mindestens eine Zuführleitung mit den Eindüseinrichtungen zur Einbringung des Reduktionsmittels in den Abgasstrom verbunden ist. Gleichermaßen kann es jedoch auch vorgesehen sein, dass die Vorrichtung mindestens eine Gasbevorratungseinrichtung zur Bevorratung und/oder Abgabe von gegebenenfalls komprimierten Gasen, insbesondere von Druckluft, aufweist, insbesondere wobei die Gasbevorratungseinrichtung dem Reaktor zugeordnet ist, vorzugsweise über mindestens eine Zuführleitung mit den Eindüseinrichtungen zur Einbringung des Kühlmittels in den Abgasstrom verbunden ist.

Gleichfalls ist es im Allgemeinen vorgesehen, dass die Druckbeaufschlagung der Eindüseinrichtungen zum Austragen des Kühlmittels in den Reaktor mittels der in der Gasbevorratungseinrichtung bevorrateten Gase durchführbar ist und/oder dass die Druckbeaufschlagung der Eindüseinrichtungen zum Austragen des Reduktionsmittels in den Reaktor mittels der in der Gasbevorratungseinrichtung bevorrateten Gase durchführbar ist.

Es kann jedoch auch vorgesehen sein, dass unterschiedliche Gasbevorratungseinrichtungen bzw. jeweils getrennte Gasbevorratungseinrichtungen zum Austragen des Kühlmittels und zum Austragen des Reduktionsmittels verwendet werden. Dies hat keine Auswirkung auf die Wirkungsweise der Vorrichtung, sondern ist allein den jeweiligen konstruktiven Gegebenheiten geschuldet. Gleichfalls können auch dieselbe oder getrennte Steuereinheiten zur Steuerung der Druckbeaufschlagung zum Austragen des Kühlmittels sowie zum Austragen des Reduktionsmittels verwendet werden.

Als besonders vorteilhaft hat es sich erwiesen, wenn die Vorrichtung mindestens eine Dosier- und/oder Mischeinrichtung aufweist.

In diesem Zusammenhang kann es vorgesehen sein, dass die Dosier- und/oder Mischeinrichtung mit den Bevorratungseinrichtungen zur Bereitstellung des Reduktionsmittels und mit den Eindüseinrichtungen zur Bereitstellung des Reduktionsmittels und mit den Eindüseinrichtungen zur Einbringung des Reduktionsmittels in den Abgasstrom und mit der gegebenenfalls vorhandenen Wasserbevorratungseinrichtung verbunden ist.

Weiterhin kann es vorgesehen sein, dass die Dosier- und Mischeinrichtung derart ausgebildet ist, dass die Konzentrationen der wässrigen Lösungen des Reduktionsmittels identisch regelbar sind und/oder für einzelne, insbesondere für jede Eindüseinrichtung zur Einbringung des Reduktionsmittels in den Abgasstrom und/oder für Gruppen von Eindüseinrichtungen zur Einbringung des Reduktionsmittels in den Abgasstrom, vorzugsweise für jede Eindüseinrichtung zur Einbringung des Reduktionsmittels in den Abgasstrom, individuell regelbar sind.

Darüber hinaus hat es sich als vorteilhaft erwiesen, wenn die Dosier- und/oder Mischeinrichtung derart ausgebildet ist, dass die Gewichts- und/oder Volumenverhältnisse der Reduktionsmittel zueinander, insbesondere die Gewichts- und/oder Volumenverhältnisse von Mischungen der Reduktionsmittel, und/oder die Konzentrationen der wässrigen Lösungen der Reduktionsmittel identisch regelbar sind und/oder für einzelne, insbesondere für jede Eindüseinrichtung zur Einbringung des Reduktionsmittels in den Abgasstrom und/oder für Gruppen von Eindüseinrichtungen zur Einbringung des Reduktionsmittels in den Abgasstrom, vorzugsweise für jede Eindüseinrichtung zur Einbringung des Reduktionsmittels in den Abgasstrom, individuell regelbar sind.

Bevorzugt kann es sein, dass die Einbringung des Kühlmittels in den Abgasstrom über eine Ermittlung von Temperaturprofilen des Abgasstroms und/oder über eine Ermittlung von Temperaturgradienten des Abgasstroms und/oder über ein Lastsignal steuerbar ist.

Gleichfalls hat es sich bewährt, wenn die Einbringung des Reduktionsmittels in den Abgasstrom über eine Ermittlung von Temperaturprofilen des Abgasstroms und/oder über eine Ermittlung von Temperaturgradienten des Abgasstroms regelbar ist.

In diesem Zusammenhang hat es sich besonders bewährt, wenn die Einbringung des Reduktionsmittels in den Abgasstrom zusätzlich über ein Lastsignal und/oder über einen Vergleich zwischen einem gemessenen Wert für den Stickoxidrestgehalt des nach der Behandlung resultierenden Reingases einerseits und einem vorgegebenen Sollwert andererseits regelbar ist.

Besonders gute Ergebnisse werden erhalten, wenn die Einbringung des Reduktionsmittels und die Einbringung des Kühlmittels in den Abgasstrom aufeinander abstimmbar ist. Hierdurch können, insbesondere im Rahmen der erfindungsgemäßen Verfahrensführung, besondere Synergieeffekte erzielt werden, insbesondere im Hinblick auf eine hohe Abscheiderate der Stickoxide aus den zu reinigenden Abgasen sowie eine deutliche Reduzierung des Reduktionsmittelverbrauchs, des Kühlmittelverbrauchs und des Ammoniak-Schlupfes.

Bevorzugt ist durch die Einbringung des Kühlmittels in den Abgasstrom ein Temperaturprofil des Abgasstroms einstellbar. In diesem Zusammenhang kann es weiterhin vorgesehen sein, dass ein gleichmäßiges Temperaturprofil oder ein ungleichmäßiges Temperaturprofil des Abgasstroms einstellbar ist.

Was die Einstellung der Temperaturen durch die Einbringung des Kühlmittels in den Abgasstrom anbelangt, so hat es sich bewährt, wenn durch die Einbringung des Kühlmittels der Abgasstrom zumindest bereichsweise auf Temperaturen im Bereich von 750 bis 1.200 °C, insbesondere 800 bis 1.150 °C, vorzugsweise 850 bis 1.100 °C, einstellbar ist.

Darüber hinaus kann es vorgesehen sein, dass die Vorrichtung Einrichtungen zur Ermittlung eines Lastsignals und/oder zur Ermittlung eines Wertes für den Stickoxidrestgehalt des nach der Behandlung resultierenden Reingases aufweist.

Das erfindungsgemäße Verfahren und die Vorrichtung bzw. Anlage zur Behandlung von Stickoxide enthaltenden Abgasen aus technischen Prozessen sind in den beigefügten Figurendarstellungen beispielhaft und in nicht beschränkender Weise veranschaulicht.

Weitere Vorteile, Eigenschaften, Aspekte und Merkmale der vorliegenden Erfindung ergeben sich aus den folgenden Beschreibungen von in der Zeichnung dargestellten, erfindungsgemäß bevorzugten Ausführungsformen.

Es zeigt
- Fig. 1: eine schematische Darstellung einer Vorrichtung zur Durchführung eines Verfahrens nach der Erfindung
- Fig. 2: eine perspektivische Darstellung des Reaktors der Vorrichtung

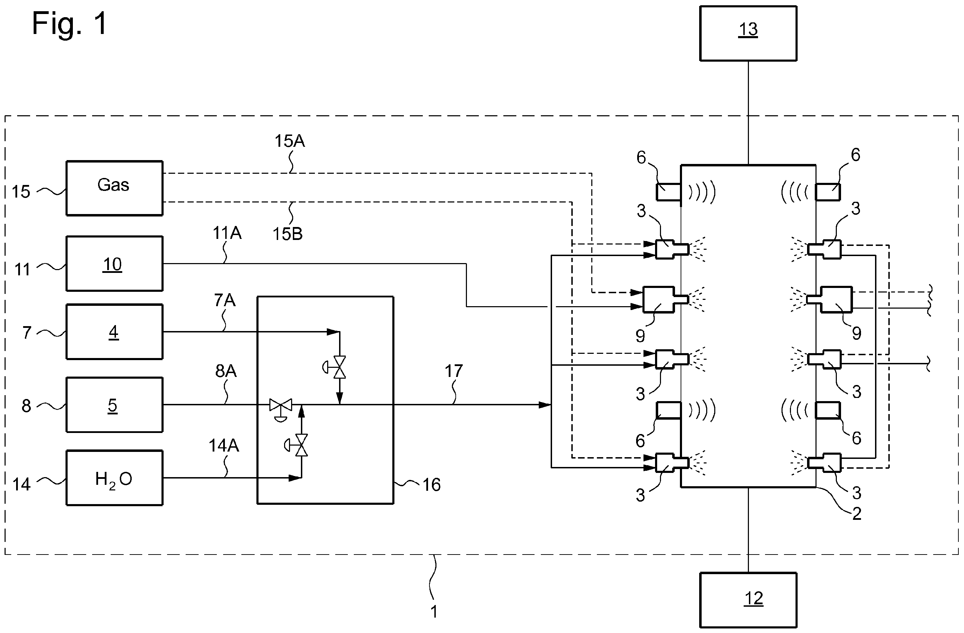

Fig. 1 zeigt eine schematische Darstellung einer Vorrichtung 1 zur Durchführung eines Verfahrens nach der Erfindung.

Die Figur zeigt einen Reaktor 2 zur Durchführung des erfindungsgemäßen Verfahrens zur Behandlung von Stickoxide enthaltenden Abgasen aus technischen Prozessen, wie Rauchgasen. Die Vorrichtung ist üblicherweise einem Brennkessel 12, beispielsweise dem Brennkessel einer Großfeuerungsanlage, wie einem Heizkraftwerk oder einer Abfallverbrennungsanlage, nachgeschaltet und befindet sich unmittelbar stromaufwärts zu den Wärmetauschern bzw. Heizflächen 13, in welchen den Rauchgasen die Wärmeenergie entzogen und der weiteren Verwertung zugeführt wird.

Der Reaktor 2 weist eine Vielzahl von Eindüseinrichtungen 3 zur Einbringung eines Reduktionsmittels in den Reaktor 2 auf, wobei in Abhängigkeit von den jeweiligen Gegebenheiten auch mehr oder weniger Eindüsebenen vorgesehen sein können. Die Eindüseinrichtungen 3 sind zur Verdeutlichung in drei Ebenen angeordnet. Weiterhin weist der Reaktor 2 eine Mehrzahl von Eindüseinrichtungen 9 zur Einbringung eines Kühlmittels, insbesondere von Kühlwasser, in den Reaktor 2 auf, wobei in der Figurendarstellung die Eindüseinrichtungen 9 zur Verdeutlichung in einer Eindüsebene angeordnet sind. Es ist die Einbringung des Kühlwassers über lediglich eine Eindüsebene bevorzugt, um den Kühlwasserverbrauch möglichst gering zu halten; in Abhängigkeit von den jeweiligen Gegebenheiten können jedoch auch mehrere Eindüsebenen vorgesehen sein.

Weiterhin weist der Reaktor 2 Messsysteme zur akustischen Gastemperaturmessung 6 auf, welche in der Figurendarstellung stromabwärts zu den Eindüseinrichtungen 3 und 9 sowie stromabwärts zu der am weitesten stromaufwärts gelegenen Eindüseinrichtung 3 zur Einbringung eines Reduktionsmittels in den Abgasstrom angeordnet sind. In der Figurendarstellung sind zwei Ebenen mit Messeinrichtungen 6 dargestellt. Zwei Ebenen mit Messeinrichtungen 6 sind üblicherweise notwendig, aber auch ausreichend, um genügend Informationen über die Temperaturverteilung im Abgasstrom zu erhalten. Falls eine Vielzahl von Eindüsebenen vorhanden ist, können auch mehrere Ebenen von Messeinrichtungen 6 vorgesehen sein, da die akustischen Messeinrichtungen 6 üblicherweise genügend Informationen für die Steuerung von drei Eindüsebenen liefern.

Durch die Messsysteme 6 kann die Temperaturverteilung im Abgasstrom, insbesondere orthogonal zur Strömungsrichtung der Abgase, welche vom Brennkessel 12 zum Bereich der Wärmetauscher 13 verläuft, bestimmt werden. Auf Grundlage der durch die Messsysteme 6 ermittelten Temperaturverteilungen im Abgasstrom können Temperaturprofile bzw. Temperaturgradienten, für einzelne Sektionen des Abgasstroms bestimmt werden, so dass die Zusammensetzung und die Menge sowie der Einbringungsort des in den Reaktor 2 eingebrachten Reduktionsmittels (4, 5) sowie Menge und Einbringungsort des Kühlmittels gezielt eingestellt werden können. Darüber hinaus können auf Grundlage der durch die Temperaturmessung gewonnenen Daten auch der Eindüsdruck und die Tröpfchengröße gezielt eingestellt werden, um die Eindringtiefe in den Abgasstrom einzustellen.

Die Eindüseinrichtungen 3 zur Einbringung des Reduktionsmittels in den Abgasstrom sind über eine Zuführleitung 15B mit einem Bevorratungsgefäß 15 für Druckluft verbunden. Weiterhin sind die Eindüseinrichtungen 3 über die Zuführleitung 17 mit einer Mischvorrichtung 16 verbunden, welche über die Versorgungsleitungen 7A und 8A an die Vorratsgefäße 7 und 8 angeschlossen sind, die die Reduktionsmittel 4 (Ammoniak) und 5 (Harnstoff) in Form ihrer wässrigen Lösung enthalten. Weiterhin ist die Mischeinrichtung 16 über die Zuführleitung 14A mit einem Bevorratungsgefäß 14 für Wasser verbunden.

Alternativ kann es jedoch auch vorgesehen sein, dass nicht nur die Vorratsgefäße 7 und 8 zur Aufbewahrung bzw. Abgabe der Reduktionsmittel und das Vorratsgefäß 14 zur Aufbewahrung bzw. Abgabe von Wasser mit der Mischeinrichtung 16 verbunden sind, sondern auch das Bevorratungsgefäß 15 zur Abgabe von Druckluft mit der Mischvorrichtung 16 verbunden ist.

Darüber hinaus kann die Mischeinrichtung 16 bevorzugt abweichend von der Figurendarstellung nicht nur über eine Versorgungsleitung mit den Eindüseinrichtungen 3 verbunden sein, sondern über mehrere. Es ist bevorzugt, wenn zumindest jede Eindüsebene von Eindüseinrichtungen 3 über mindestens eine eigene Versorgungsleitung mit der Mischeinrichtung 16 verbunden ist. Die besten Ergebnisse werden jedoch erhalten, wenn jede Eindüseinrichtung individuell mit der Mischeinrichtung 16 verbunden ist, so dass die Konzentration an Reduktionsmittel für jede Eindüseinrichtung 3 individuell eingestellt werden kann. Aus Gründen der Übersichtlichkeit wurde in der Figurendarstellung jedoch auf die Abbildung einer Mehrzahl von Versorgungsleitungen verzichtet.

Weiterhin sind die Eindüseinrichtungen 9 zur Einbringung des Kühlmittels in den Abgasstrom über die Zuführleitung 11A mit dem Bevorratungsgefäß 11 zur Bevorratung bzw. Abgabe eines Kühlmittels 10 verbunden. Bei dem Kühlmittel 10 handelt es sich bevorzugt um Wasser.

Alternativ zu der in der Figurendarstellung angegebenen Ausführungsform kann das Kühlmittel 10 sowie das Wasser, welches in der Figurendarstellung in Bevorratungsgefäß 14 bevorratet ist, auch in einem Gefäß gelagert und aus diesem abgegeben werden. Dieser Weg wird in der Praxis jedoch in der Regel nicht bevorzugt, da das Kühlwasser normales Brauchwasser oder Leitungswasser sein kann, wohingegen zur Einstellung des Reduktionsmittelgehalts üblicherweise vollentsalztes Wasser oder deionisiertes Wasser eingesetzt wird, da durch die Verwendung der basischen Reduktionsmittel Ammoniak und Harnstoff andernfalls Salze, wie beispielsweise Kalk, in den Zuführleitungen 17 und den Eindüseinrichtungen 3 ausgefällt und diese innerhalb kürzester Zeit zugesetzt werden.

Darüber hinaus kann es im Rahmen der vorliegenden Erfindung abweichend von der Figurendarstellung vorgesehen sein, dass nicht zwei Reduktionsmittel, insbesondere wässrige Ammoniaklösung und wässrige Harnstofflösung, sondern nur ein Reduktionsmittel vorgesehen ist. Dies verringert zwar die Effizienz des erfindungsgemäßen Verfahrens, vereinfacht jedoch die Prozesssteuerung erheblich.

Im Rahmen des erfindungsgemäßen Verfahrens wird nun bevorzugt derart vorgegangen, dass aufgrund des Lastsignals des Brennkessels eine Grundeinstellung für die Dosierung bzw. Zugabe des Reduktionsmittels bzw. der Reduktionsmittel in den Reaktor 2 ausgewählt wird.

Auf Grundlage der durch die Messeinrichtung 6 ermittelten Temperaturverteilungen in Ebenen orthogonal zur Strömungsrichtung der Rauchgase werden die Ebenen in Sektionen unterteilt und aufeinanderfolgende und insbesondere miteinander fluchtende Ebenen miteinander korreliert, so dass dreidimensionale Bereiche definiert werden. Für diese dreidimensionalen Bereiche wird nunmehr jeweils ein Temperaturprofil bzw. ein Temperaturgradient des Abgasstromes bestimmt, woraus sich die relative Rauchgasgeschwindigkeit ermitteln lässt. Auf Basis der so ermittelten Rauchgasgeschwindigkeiten sowie der gemessenen Temperaturen werden die Eindüseinrichtungen derart gesteuert, dass zum einen nur Eindüseinrichtungen 3 für die Einbringung der Reduktionsmittel verwendet werden, welche in einem für die Reduktion der Stickoxide optimalen Temperaturbereich eindüsen können, und zum anderen die aus den jeweiligen Eindüseinrichtungen 3 austretenden Reduktionsmittelmengen spezifisch auf die NOx-Fracht in den jeweiligen Sektionen angepasst. Falls erforderlich, wird in Sektionen, in welchen die Rauchgastemperaturen über den für die Entstickung optimalen Temperaturen liegen, Kühlmittel 10 durch die Eindüseinrichtungen 9 selektiv eingebracht, wobei die Menge des eingebrachten Kühlmittels 10 möglichst gering gehalten wird, um die Wärmeübertragung in den Wärmetauschern 13 möglichst effizient zu gestalten.

Es hat sich gezeigt, dass oftmals eine einzige Ebene von Eindüseinrichtungen 9 zur Einbringung des Kühlwassers in den Abgasstrom ausreichend ist, um durch eine selektive Kühlung der Abgase einen für die Reduktion der Stickoxide optimalen Temperaturbereich vor Eintritt der Rauchgase in den Bereich der Wärmetauscher 13 bereitzustellen.

Durch die Zuführleitung 15A und 15B wird Druckluft zu den jeweiligen Eindüseinrichtungen 3 und 9 geführt, wodurch der jeweilige Austrittsdruck und somit die Eindringtiefe und Tröpfchengröße der Reduktionsmittelösung sowie des Kühlmittels gezielt eingestellt werden können. Alternativ ist es jedoch auch möglich, die Druckregelung gleichfalls über die Mess- und Dosiereinrichtung 16 zusammen mit der jeweiligen Mischung der Reduktionsmittel steuern zu lassen.

Kontrolliert wird das Ergebnis der erfindungsgemäßen Entstickung der Abgase aus technischen Prozessen durch einen Vergleich des Stickoxidgehalts des nach der Abgasbehandlung resultierenden Reingases mit einem vorgegebenen Sollwert. Gegebenenfalls kann bei Abweichungen zwischen dem Ist- und dem Sollwert nochmals die Zugabe der Reduktionsmittel bzw. des Kühlmittels nachgeregelt werden.

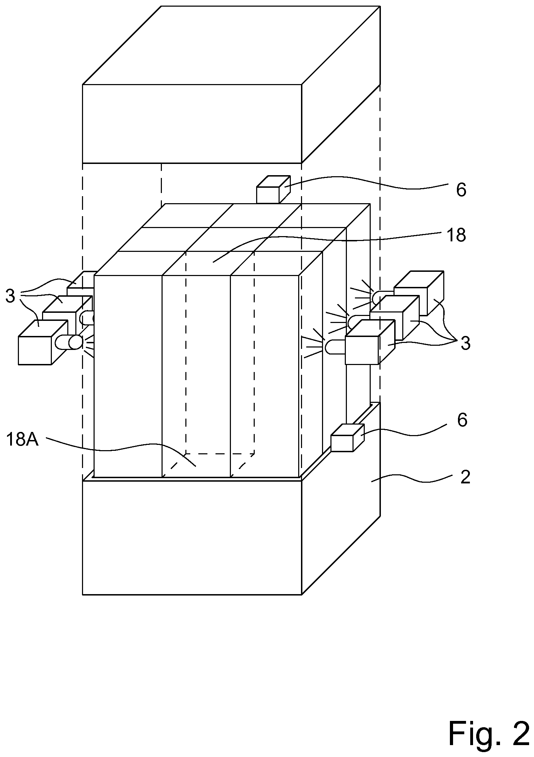

Fig. 2 zeigt eine perspektivische Darstellung des Reaktors 2, bei welcher zur Verdeutlichung nur wenige Eindüseinrichtungen 3 zur Einbringung des Reduktionsmittels in nur einer Eindüsebene in den Abgasstrom dargestellt sind.

Aus Fig. 2 ergibt sich weiterhin, wie durch die Messeinrichtungen 6 Ebenen orthogonal zur Strömungsrichtung der Abgase definiert werden, wobei nur ein Teil der Messeinrichtungen 6 aus Gründen der Übersichtlichkeit in der Figurendarstellung dargestellt ist. Die durch die Messeinrichtungen 6 zur akustischen Bestimmung der Gastemperatur erhaltenen Temperaturverteilungen im Abgasstrom in Form von Ebenen werden in Sektionen, wie beispielsweise die Sektionen 18 und 18A, unterteilt. Aufeinanderfolgende Ebenen der durch die Messeinrichtungen 6 zur akustischen Gastemperaturmessung ermittelten Temperaturverteilungen im Abgasstrom werden, wenn sie miteinander in Flucht stehen, korreliert, wie in der Figurendarstellung die Sektionen 18 und 18A. Hierdurch werden dreidimensionale Bereiche definiert, für welche ein Temperaturprofil bzw. ein Temperaturgradient bestimmt werden kann. Auf Grundlage des ermittelten Temperaturgradienten lässt sich die relative Rauchgasgeschwindigkeit in dem Bereich zwischen den Sektionen 18 und 18A ermitteln.

Eine Bestimmung der relativen Rauchgasgeschwindigkeiten ist auch dann möglich, wenn durch die Eindüseinrichtungen 3 Reduktionsmittel in den Bereich zwischen den Sektionen 18 und 18A eingedüst wird. Gleiches gilt auch, wenn durch die in der Figurendarstellung aus Gründen der Übersichtlichkeit nicht dargestellten Eindüseinrichtungen 9 zur Eindüsung von Kühlmittel, insbesondere von Kühlwasser, Kühlmittel in den Abgasstrom eingedüst wird. Da die Mengen an Reduktionsmittel und Kühlwasser, welche in den Bereich zwischen den Sektionen 18 und 18A eingebracht werden, bekannt sind, kann aufgrund der gemessenen Abkühlung und des dadurch bestimmten Temperaturgradienten die relative Rauchgasgeschwindigkeit im Vergleich zu den anderen Sektionen ermittelt werden. Sektionen mit einer hohen Abkühlung stehen dabei für eine niedrige Rauchgasgeschwindigkeit und somit eine geringe NOx-Fracht, so dass in den Bereichen zwischen diesen Sektionen nur wenig Reduktionsmittel eingedüst werden muss. Hingegen stehen nur geringe Temperaturänderungen zwischen den Sektionen 18 und 18A für eine hohe Rauchgasgeschwindigkeit, so dass eine größere Menge an Reduktionsmittel in den entsprechenden Bereich zwischen den Sektionen 18 und 18A eingedüst werden muss.

Das erfindungsgemäße Verfahren erlaubt somit eine äußerst schnelle adaptive Steuerung der Einbringung von Reduktionsmittel und gegebenenfalls Kühlmittel in den Abgasstrom auf Basis der Rauchgasgeschwindigkeiten.

Weitere Ausgestaltungen, Abwandlungen, Variationen und Besonderheiten der vorliegenden Erfindung sind für den Fachmann beim Lesen der Beschreibung ohne Weiteres erkennbar und realisierbar, ohne dass der Rahmen der vorliegenden Erfindung verlassen wird.

Die vorliegende Erfindung wird anhand der folgenden Ausführungsbeispiele veranschaulicht, ohne jedoch die vorliegende Erfindung hierauf zu beschränken.

### Ausführungsbeispiele:

Zur Verdeutlichung der Wirksamkeit des erfindungsgemäßen Verfahrens wird der Gegenstand der vorliegenden Erfindung anhand der nachfolgenden Ausführungsbeispiele exemplarisch verdeutlicht.

Das Verfahren wird erfindungsgemäß in einer Vorrichtung betrieben, wie sie schematisch und exemplarisch in den Figurendarstellungen veranschaulicht ist.

Das erfindungsgemäße Verfahren zur Reduzierung von Stickoxiden aus Rauchgasen wird an einem mit Steinkohle befeuerten Kessel des Standes der Technik bei Volllast (225 MWₑₗ) demonstriert. Der Kessel hat eine Kapazität von 650 t/h und die NOx-Basislinie, d. h. die NOx-Fracht ohne Abgasbehandlung, liegt bei 300 bis 340 mg/Nm³ (Nm³ = Normkubikmeter).

Die NOx-Emission soll im Tagesmittel bei weniger als 190 mg/Nm³ gehalten werden und der Ammoniak-Schlupf soll weniger als 3,5 mg/Nm³ betragen.

Zwischen dem Kessel und den Wärmetauschern der Anlage ist eine Vorrichtung zur Reduzierung des Stickoxidgehalts von Rauchgasen angebracht. Die Vorrichtung besteht aus einem Reaktionsraum, in welchem über drei Eindüsebenen mit jeweils 12 Eindüslanzen, d. h. insgesamt über 36 Eindüslanzen, Ammoniakwasser (25 Gew.-% NH₃ bezogen auf das Ammoniakwasser), Harnstofflösung (40 Gew.-% Harnstoff, bezogen auf die Lösung) und Gemische der beiden Flüssigkeiten eingedüst werden.

Stromabwärts zu der ersten Eindüsebene zur Einbringung der Reduktionsmittel ist eine Messeinrichtung zur Bestimmung der Temperatutverteilung im Querschnitt des Abgasstroms mittels akustischer Gastemperaturmessung angeordnet. Stromabwärts zu dieser Messeinrichtung folgt eine weitere Eindüsebene zur Einbringung des Reduktionsmittels, welche von einer Eindüsebene mit 10 Eindüslanzen zur Einbringung von Kühlwasser in den Abgasstrom gefolgt wird. Stromabwärts zu der Eindüsebene zur Einbringung der Kühlmittel ist eine letzte Eindüsebene zur Einbringung von Reduktionsmittel in den Abgasstrom angeordnet.

Auf die letzte Eindüsebene zur Einbringung von Reduktionsmitteln in den Abgasstrom folgt stromabwärts eine weitere Messeinrichtung zur Bestimmung der Gastemperatur mittels akustischer Gastemperaturmessung.

Jeweils zu Beginn des Verfahrens bzw. in regelmäßigen Abständen während der Verfahrensdauer wird die Stickoxidbelastung des Rohgases, d. h. des noch nicht behandelten Abgases, gemessen, um auf diese Weise in Kombination mit dem Lastsignal eine Grobeinstellung der Abgasbehandlungseinrichtung, insbesondere bezüglich der Eindüsung der Reduktionsmittel und des Kühlmittels, zu ermöglichen.

Während der gesamten weiteren Verfahrensdauer werden die Stickoxidbelastung der behandelten Abgase, d. h. der Reingase, sowie der Ammoniak-Schlupf bestimmt, wodurch eine Kontrolle und Nachjustierung des erfindungsgemäßen Verfahrens ermöglicht wird. Die Feinabstimmung des erfindungsgemäßen Verfahrens, insbesondere die Menge an Kühlmittel bzw. Reduktionsmittel, welche durch die jeweiligen Eindüseinrichtungen, die allesamt einzeln schaltbar sind, in den Abgasstrom eingebracht wird, sowie Entscheidung darüber, welche Eindüseinrichtungen überhaupt zur Eindüsung verwendet werden, wird auf Basis der jeweils ermittelten Temperaturverteilungen im Abgasstrom sowie der Temperaturgradienten des Abgasstroms getroffen.

Zum Vergleich wird das Verfahren wiederholt, wobei lediglich mit der unteren, d. h. der stromaufwärts gelegenen Messeinrichtung die Temperaturverteilung im Abgasstrom bestimmt wird. Diese Verfahrensführung entspricht in Anordnung und Durchführung einem fortschrittlichen SNCR-Verfahren des Standes der Technik. Die Feinjustierung der Abgasbehandlungseinrichtung erfolgt bei diesem Verfahren des Standes der Technik durch den Vergleich der Stickoxidbelastung der behandelten Abgase (d. h. der Reingase) sowie des Ammoniak-Schlupfes mit den jeweiligen Sollwerten.

Es werden jeweils insgesamt drei unterschiedliche Verfahrensabläufe getestet, welche sich darin unterscheiden, dass entweder nur Ammoniak oder nur Harnstoff oder Gemische von Ammoniak und Harnstoff als Reduktionsmittel eingesetzt werden.

Die Ergebnisse der Verfahrensdurchläufe sind in Tabelle 1 zusammengefasst.

Wie sich aus den Daten in Tabelle 1 ersehen lässt, ist mit den erfindungsgemäßen Verfahren eine Einhaltung des Zielwertes von weniger als 190 mg/ Nm³ im Tagesmittel ohne Weiteres möglich. Bei den nicht erfindungsgemäßen Verfahren zeigt sich, dass eine Eindüsung allein mit Ammoniak als Reduktionsmittel nicht ausreicht, um den geforderten Grenzwert einzuhalten. Es zeigt sich jedoch, dass mit dem erfindungsgemäßen Verfahren deutlich bessere Werte bezüglich des Ammoniak-Schlupfes erzielt werden können. Darüber hinaus kann durch die erfindungsgemäße Verfahrensführung eine erhebliche Reduzierung des Reduktionsmittelverbrauchs erzielt werden, d. h. die Rauchgasentstickung wird durch das erfindungsgemäße Verfahren deutlich effizienter gestaltet, da weniger Ressourcen verwendet werden.

Gleiches gilt auch für den Gesamtwasserverbrauch gemäß der erfindungsgemäßen Verfahrensführung im Vergleich zu der nicht erfindungsgemäßen Verfahrensführung. Hier zeigen sich ganz erhebliche Unterschiede zwischen der erfindungsgemäßen adaptiven Rauchgasentstickung, welche simultan auf die Änderungen des Rauchgasstromes reagieren kann, und Verfahren des Standes der Technik, bei welchen eine Steuerung der Einbringung der Reduktionsmittel- und Kühlwassermenge durch einen Vergleich der gemessenen Stickoxidbelastung des Reingases mit einem Sollwert gesteuert wird.

Weiterhin ist ersichtlich, dass durch die erfindungsgemäße Verfahrensführung sowohl der Prozesswasserverbrauch bei der Eindüsung der Reduktionsmittel als auch der Kühlwasserverbrauch gegenüber dem Stand der Technik deutlich verringert werden kann, so dass der Gesamtwasserverbrauch um circa 70 % gesenkt werden kann. Darüber hinaus zeigt sich auch, dass sowohl der Ammoniak-Schlupf um circa 20 bis 30 % sowie der Reduktionsmittelverbrauch um circa 10 % vermindert werden kann.

**Tabelle 1: Vergleich des erfindungsgemäßen Verfahrens und Verfahren des Standes der Technik**

| | Erfindungsgemäße Verfahrensführung | | | Nicht erfindungsgemäße Verfahrensführung | | |
|---|---|---|---|---|---|---|
| Reduktionsmittel | NH₃ | Harnstoff | NH₃ / Harnstoff | NH₃ | Harn-stoff | NH₃ / Harnstoff |
| Verhältnis NH₃ : Harnstoff | 100 % NH₃ | 100 % Harnstoff | 1 : 99 bis 99 : 1 | 100 % NH₃ | 100 % Harnstoff | 1 : 99 bis 99 : 1 |
| NOₓ Rohgas [mg/Nm³] | 334 | 324 | 335 | 328 | 318 | 337 |
| NOₓ Reingas [mg/Nm³] | 187 | 183 | 156 | 198 | 186 | 173 |
| ΔNOₓ [mg/Nm³] | 147 | 141 | 179 | 130 | 132 | 164 |
| NH₃-Schlupf [mg/Nm³] | 3,4 | 3,2 | 2,9 | 5,3 | 4,3 | 3,2 |
| Reduktionsmittelverbrauch [kg/h] | 732 | 692 | 676 | 812 | 768 | 751 |
| Kühlwasserverbrauch [l/h] | 2.650 | 1370 | 1.500 | 4.290 | 3.800 | 3.650 |
| Prozesswasser-verbrauch [l/h] | 2.380 | 1.620 | 1.840 | 8.390 | 4.830 | 6.350 |
| Gesamtwasser-verbrauch [l/h] | 5.030 | 2.990 | 3.340 | 12.680 | 8.630 | 10.000 |

**Bezugszeichenliste:**

| | | | |
|---|---|---|---|
| 1 | Vorrichtung | 11 | Bevorratungseinrichtung, Kühlmittel |
| 2 | Reaktor | | |
| 3 | Eindüseinrichung zur Einbringung des Reduktionsmittels | 11A | Zuführleitung, Kühlmittel |
| | | 12 | Brennkessel |
| 4 | Reduktionsmittel, NH₃ | 13 | Wärmetauscher |
| 5 | Reduktionsmittel, Harnstoff | 14 | Bevorratungseinrichtung, Wasser |
| 6 | Messeinrichtungen | 14A | Zuführleitung |
| 7 | Bevorratungseinrichtung, NH₃ | 15 | Bevorratungseinrichtung, Druckluft |
| 7A | Zuführleitung, NH₃ | | |
| 8 | Bevorratungseinrichtung, Harnstoff | 15A | Zuführleitung, Druckluft |
| | | 15B | Zuführleitung, Druckluft |
| 8A | Zuführleitung, Harnstoff | 16 | Mischeinrichtung |
| 9 | Eindüseinrichung zur Einbringung des Kühlmittels | 17 | Zuführleitung |
| | | 18 | Sektion |
| 10 | Kühlmittel | 18A | Sektio |

## Patentansprüche

1. Verfahren zur Entstickung von Abgasen aus großtechnischen Anlagen mittels chemischer Reduktion der Stickoxide, wobei mindestens ein stickstoffhaltiges Reduktionsmittel mittels Eindüseinrichtungen (3) in den Strom der Stickoxide enthaltenden Abgase eingebracht und die Menge des in den Abgasstrom eingebrachten Reduktionsmittels in Abhängigkeit von der Abgasgeschwindigkeit eingestellt wird und für jede einzelne Eindüseinrichtung (3) individuell oder zumindest gruppenweise regelbar ist,
**dadurch gekennzeichnet,**
**dass** zur Ermittlung und/oder Bestimmung der Abgasgeschwindigkeit ein Temperaturprofil und/oder ein Temperaturgradient des Abgasstroms erstellt wird, wobei auf Grundlage des Temperaturprofils und/oder des Temperaturgradienten des Abgasstroms die relative Geschwindigkeit des Abgasstroms bestimmt wird, indem im Abgasstrom jeweils Ebenen von Sektionen (Messbereiche) (18) definiert werden, wobei die Ebenen der Sektionen (18) in Strömungsrichtung der Abgase aufeinanderfolgend und miteinander fluchtend angeordnet sind und miteinander korreliert werden, wobei in den verschiedenen Sektionen (18) der jeweiligen Ebenen jeweils die Abgastemperatur zumindest in einer ersten Ebene stromaufwärts zu den Eindüseinrichtungen (3) und zumindest in einer zweiten Ebene stromabwärts zu den Eindüseinrichtungen (3) bestimmt wird und auf Grundlage der ermittelten Abgastemperaturen der verschiedenen Sektionen (18) der jeweiligen Ebenen Temperaturprofile und/oder Temperaturgradienten zwischen den in den jeweiligen Ebenen jeweils in Strömungsrichtung aufeinanderfolgenden und miteinander fluchtenden sowie miteinander korrelierten Sektionen (18) bestimmt werden, und wobei auf Grundlage der Temperaturprofile und/oder der Temperaturgradienten im Abgasstrom die relative Geschwindigkeit der Abgase in den verschiedenen Sektionen (18) zueinander bestimmt wird und den Ebenen von Sektionen (18) einzelne definierte Eindüseinrichtungen (3) und/oder definierte Gruppen von Eindüseinrichtungen (3) zur Einbringung des Reduktionsmittels zugeordnet werden.

2. Verfahren nach Anspruch 1, **dadurch gekennzeichnet, dass** zur Ermittlung der Temperaturprofile und/oder der Temperaturgradienten die Temperaturen des Abgasstroms in mindestens 2 Ebenen, insbesondere 2 bis 10 Ebenen, vorzugsweise 2 bis 5 Ebenen, bevorzugt 2 oder 3 Ebenen, besonders bevorzugt 2 Ebenen, ermittelt werden.

3. Verfahren nach Anspruch 1 oder 2, **dadurch gekennzeichnet, dass** die Temperaturen des Abgasstroms mittels akustischer und/oder optischer Temperaturmessung, vorzugsweise akustischer Temperaturmessung, ermittelt werden.

4. Verfahren nach einem der vorangehenden Ansprüche, **dadurch gekennzeichnet, dass** das Einbringen des Reduktionsmittels in der Abgasstrom derart erfolgt, dass das Reduktionsmittel mit den Stickoxiden reagiert, insbesondere die Stickoxide reduziert werden, vorzugsweise zu elementarem Stickstoff.

5. Verfahren nach einem der vorangehenden Ansprüche, **dadurch gekennzeichnet, dass** das Reduktionsmittel in Form einer wässrigen Lösung eingesetzt wird, insbesondere wobei Ammoniak (4) und/oder Harnstoff (5), insbesondere in Form ihrer wässrigen Lösungen, als Reduktionsmittel eingesetzt wird.

6. Verfahren nach einem der vorangehenden Ansprüche, **dadurch gekennzeichnet, dass** das Reduktionsmittel in feiner Verteilung in den Abgasstrom eingebracht wird, insbesondere eingesprüht oder eingedüst wird.

7. Verfahren einem der vorangehenden Ansprüche, **dadurch gekennzeichnet, dass** das Reduktionsmittel mittels Eindüseinrichtungen (3), insbesondere Eindüslanzen, in den Abgasstrom eingebracht wird, insbesondere wobei jede Eindüseinrichtung (3) eine oder mehrere, insbesondere 1 bis 20, vorzugsweise 1 bis 15, bevorzugt 1 bis 10, besonderes bevorzugt 1 bis 5, Düsen zur Einbringung des Reduktionsmittels in den Abgasstrom aufweist, insbesondere wobei die Eindüseinrichtungen (3) zur Einbringung des Reduktionsmittels in den Abgasstrom in 1 bis 10, insbesondere 1 bis 7, vorzugsweise 1 bis 5, Eindüsebenen angeordnet sind, insbesondere wobei jede Eindüsebene 1 bis 20, insbesondere 1 bis 15, vorzugsweise 1 bis 12, Eindüseinrichtungen (3) aufweist.

8. Verfahren nach einem der vorangehenden Ansprüche, **dadurch gekennzeichnet, dass** das Reduktionsmittel über 1 bis 200, insbesondere 2 bis 100, vorzugsweise 5 bis 60, Eindüseinrichtungen (3) in den Rauchgasstrom eingebracht wird.

9. Verfahren nach einem der vorangehenden Ansprüche, **dadurch gekennzeichnet, dass** die Temperaturen des Abgasstroms im Bereich der Eindüseinrichtungen (3), insbesondere zwischen einzelnen Eindüsebenen, zur Einbringung des Reduktionsmittels und zumindest in einer zweiten Ebene stromabwärts zu den Eindüseinrichtungen (3) zur Einbringung des Reduktionsmittels bestimmt wird.

10. Verfahren nach einem der vorangehenden Ansprüche, **dadurch gekennzeichnet, dass** gleichzeitig mit und/oder zeitlich vor, insbesondere gleichzeitig mit, der Einbringung des Reduktionsmittels in den Abgasstrom eine selektive Kühlung der Abgase durchgeführt wird, insbesondere wobei mindestens ein Kühlmittel (10) in den Strom der Abgase eingebracht und/oder mit diesem in Kontakt gebracht wird.

## Claims

1. A method for the denitrification of exhaust gases from industrial plants by means of chemical reduction of the nitrogen oxides, wherein at least one nitrogen-containing reducing agent is introduced into the stream of the nitrogen oxide-containing exhaust gases by means of injection devices (3) and the amount of the reducing agent introduced into the exhaust gas stream is adjusted depending on the exhaust gas velocity and can be regulated individually or at least in groups for each individual injection device (3),
**characterised in that**
a temperature profile and/or a temperature gradient of the exhaust gas stream is created to calculate and/or determine the exhaust gas velocity, wherein the relative velocity of the exhaust gas stream is determined on the basis of the temperature profile and/or the temperature gradient of the exhaust gas stream in each case by defining planes of sections (measuring regions) (18), wherein the planes of the sections (18) are arranged in succession and in alignment with one another in the flow direction of the exhaust gases and are correlated with one another, wherein the exhaust gas temperature in the different sections (18) of the respective planes is determined in each case at least in a first plane upstream of the injection devices (3) and at least in a second plane downstream of the injection devices (3), and, on the basis of the calculated exhaust gas temperatures of the different sections (18) of the respective planes, temperature profiles and/or temperature gradients are determined between those sections (18) which are successive in the flow of direction and are aligned and correlated with one another, and wherein, on the basis of the temperature profiles and/or the temperature gradients in the exhaust gas stream, the relative velocity of the exhaust gases in the different sections (18) to one another is determined, and individual defined injection devices (3) and/or defined groups of injection devices (3) for introducing the reducing agent are assigned to the planes of sections (18).

2. The method according to claim 1, **characterised in that**, to calculate the temperature profiles and/or the temperature gradients, the temperatures of the exhaust gas stream in at least 2 planes, in particular 2 to 10 planes, preferably 2 to 5 planes, preferably 2 or 3 planes, particularly preferably 2 planes, are determined.

3. The method according to claim 1 or 2, **characterised in that** the temperatures of the exhaust gas stream are calculated by means of acoustic and/or optical temperature measurement, preferably acoustic temperature measurement.

4. The method according to any one of the preceding claims, **characterised in that** the reducing agent is introduced into the exhaust gas stream in such a way that the reducing agent reacts with the nitrogen oxides, in particular the nitrogen oxides are reduced, preferably to elemental nitrogen.

5. The method according to any one of the preceding claims, **characterised in that** the reducing agent is used in the form of an aqueous solution, in particular wherein ammonia (4) and/or urea (5), in particular in the form of their aqueous solutions, are used as reducing agents.

6. The method according to any one of the preceding claims, **characterised in that** the reducing agent is introduced, in particular is sprayed or injected, into the exhaust gas stream in a fine dispersion.

7. The method according to any one of the preceding claims, **characterised in that** the reducing agent is introduced into the exhaust gas stream by means of injection devices (3), in particular injection lances, in particular wherein each injection device (3) has one or more, in particular 1 to 20, preferably 1 to 15, preferably 1 to 10, particularly preferably 1 to 5, nozzles for introducing the reducing agent into the exhaust gas stream, in particular wherein the injection devices (3) for introducing the reducing agent into the exhaust gas stream are arranged in 1 to 10, in particular 1 to 7, preferably 1 to 5, injection planes, in particular wherein each injection plane has 1 to 20, in particular 1 to 15, preferably 1 to 12, injection devices (3).

8. The method according to any one of the preceding claims, **characterised in that** the reducing agent is introduced into the flue gas stream via 1 to 200, in particular 2 to 100, preferably 5 to 60, injection devices (3).

9. The method according to any one of the preceding claims, **characterised in that** the temperatures of the exhaust gas stream are determined in the region of the injection devices (3), in particular between individual injection planes, for introducing the reducing agent and at least in a second plane downstream of the injection devices (3) for introducing the reducing agent.

10. The method according to any one of the preceding claims, **characterised in that** the exhaust gases are selectively cooled simultaneously with and/or before, in particular simultaneously with, the introduction of the reducing agent into the exhaust gas stream, in particular wherein at least one coolant (10) is introduced into the stream of exhaust gases and/or brought into contact therewith.

## Revendications

1. Procédé de dénitrification des effluents gazeux d'installations industrielles par réduction chimique des oxydes d'azote, au moins un réducteur azoté étant introduit dans le flux des effluents gazeux contenant des oxydes d'azote au moyen de dispositifs d'injection (3) et la quantité de réducteur introduite dans le flux d'effluents gazeux étant ajustée en fonction de la vitesse des effluents gazeux et chaque dispositif d'injection (3) individuel pouvant être réglé individuellement ou au moins par groupe,
**caractérisé en ce que**
un profil de température et/ou un gradient de température du flux d'effluents gazeux est créé pour identifier et/ou déterminer la vitesse des effluents gazeux, la vitesse relative du flux d'effluents gazeux étant déterminée sur la base du profil de température et/ou du gradient de température du flux d'effluents gazeux, **en ce que** dans le flux d'effluents gazeux, les niveaux des sections (zones de mesure) (18) sont définis respectivement, les niveaux des sections (18) étant disposés successivement et en alignement les uns avec les autres dans le sens d'écoulement des effluents gazeux et étant corrélés entre eux, la température des effluents gazeux dans les différentes sections (18) des niveaux respectifs étant déterminée respectivement au moins dans un premier niveau en amont des dispositifs d'injection (3) et au moins dans un second niveau en aval des dispositifs d'injection (3) et sur la base des températures des effluents gazeux déterminées des différentes sections (18) des niveaux respectifs, des profils de température et/ou des gradients de température étant déterminés entre les sections (18) disposées successivement et en alignement les unes avec les autres dans les niveaux respectifs dans la direction de l'écoulement, ainsi que corrélées les unes aux autres, et la vitesse relative des effluents gazeux dans les différentes sections (18) les unes par rapport aux autres étant déterminée sur la base des profils de température et/ou des gradients de température dans le flux d'effluents gazeux et des dispositifs d'injection (3) définis individuels et/ou des groupes définis de dispositifs d'injection (3) étant affectés aux niveaux des sections (18) pour introduire l'agent réducteur.

2. Procédé selon la revendication 1, **caractérisé en ce que** pour déterminer les profils de température et/ou les gradients de température, les températures des effluents gazeux sont identifiées en au moins 2 niveaux, en particulier 2 à 10 niveaux, de préférence 2 à 5 niveaux, de préférence 2 ou 3 niveaux, de manière particulièrement préférée 2 niveaux.

3. Procédé selon la revendication 1 ou 2, **caractérisé en ce que** les températures du flux d'effluents gazeux sont déterminées au moyen d'une mesure de température acoustique et/ou optique, de préférence une mesure de température acoustique.

4. Procédé selon l'une quelconque des revendications précédentes, **caractérisé en ce que** l'introduction du réducteur dans le flux d'effluents gazeux a lieu de telle sorte que le réducteur réagisse avec les oxydes d'azote, en particulier que les oxydes d'azote soient réduits, de préférence en azote élémentaire.

5. Procédé selon l'une quelconque des revendications précédentes, **caractérisé en ce que** le réducteur est utilisé sous forme de solution aqueuse, en particulier de l'ammoniac (4) et/ou de l'urée (5), en particulier sous forme de leurs solutions aqueuses, étant utilisés comme réducteur.

6. Procédé selon l'une quelconque des revendications précédentes, **caractérisé en ce que** le réducteur est introduit dans le flux d'effluents gazeux sous forme finement divisée, en particulier pulvérisé ou injecté.

7. Procédé selon l'une quelconque des revendications précédentes, **caractérisé en ce que** le réducteur est introduit dans le flux d'effluents gazeux au moyen de dispositifs d'injection (3), en particulier des lances d'injection, en particulier chaque dispositif d'injection (3) comportant une ou plusieurs, en particulier 1 à 20, de préférence 1 à 15, de préférence 1 à 10, de manière particulièrement préférée 1 à 5, buses pour introduire le réducteur dans le flux d'effluents gazeux, en particulier les dispositifs d'injection (3) pour introduire le réducteur dans le flux d'effluents gazeux étant disposés en 1 à 10, en particulier 1 à 7, de préférence 1 à 5, niveaux d'injection, en particulier chaque niveau d'injection comprenant 1 à 20, en particulier 1 à 15, de préférence 1 à 12, dispositifs d'injection (3).

8. Procédé selon l'une quelconque des revendications précédentes, **caractérisé en ce que** le réducteur est introduit dans le flux de gaz de fumées via 1 à 200, en particulier 2 à 100, de préférence 5 à 60, dispositifs d'injection (3).

9. Procédé selon l'une des revendications précédentes, **caractérisé en ce que** les températures du flux d'effluents gazeux sont déterminées dans la zone des dispositifs d'injection (3), en particulier entre les niveaux d'injection individuels, pour introduire le réducteur et au moins dans un deuxième niveau en aval des dispositifs d'injection (3) pour introduire le réducteur.

10. Procédé selon l'une quelconque des revendications précédentes, **caractérisé en ce qu'**un refroidissement sélectif des effluents gazeux est effectué simultanément à et/ou avant, en particulier simultanément à, l'introduction du réducteur dans le flux d'effluents gazeux, en particulier au moins un fluide caloporteur (10) étant introduit dans et/ou mis en contact avec le flux d'effluents gazeux.
